# EUROPÄISCHE PATENTANMELDUNG

(11) **EP 3 671 691 A1**
(43) Veröffentlichungstag der Anmeldung: **24.06.2020**
(21) Anmeldenummer: 18214065.7
(22) Anmeldetag: 19.12.2018
(51) Int. Cl.: G08G 1/017, B60W 30/18, G08G 1/16, G05D 1/02

(54) **VERFAHREN, COMPUTER-PROGRAMM-PRODUKT, ZENTRALE STEUERUNGSEINHEIT UND STEUERUNGSSYSTEM ZUM STEUERN ZUMINDEST TEILAUTOMATISIERTER FAHRZEUGE, ANTEILIG MIT FAHRZEUGÜBERLÄNGEN, IN EINEM FAHRBAHN-GEFAHRENBEREICH, INSBESONDERE KREUZUNGEN VON FAHRBAHNEN IM STRASSENVERKEHR**

(71) Anmelder: Siemens Mobility GmbH, 81739 München (DE)
(72) Erfinder: Höfig, Kai, 80797 München (DE)

(57) **Zusammenfassung**

Um in einem Fahrbahn-Gefahrenbereich (FGB), insbesondere Kreuzungen (KZ, KZ') von Fahrbahnen im Straßenverkehr, zumindest teilautomatisierte Fahrzeuge (FZ₁...FZₙ), anteilig mit Fahrzeugüberlängen, so zu steuern, dass Fahrzeuge mit Fahrzeugüberlänge in einem fließenden Fahrfluss ohne Anhalt-Anfahr-Unterbrechungen, wie sie z.B. durch zeichengebenden Anlagen, vorzugsweise Ampeln, entstehen, den Fahrbahn-Gefahrenbereich passieren können, wird es vorgeschlagen, dass
**a)** mindestens ein in Bezug auf Fahrzeuglänge überlanges Fahrzeug (FZ_{übl}, FZ₁₅) und jedes andere Fahrzeug der Fahrzeuge (FZ₁...FZₙ) beim Sich-Nähern des Fahrbahn-Gefahrenbereichs (FGB, KZ, KZ') zum Passieren desjenigen eine Fahrzeugverfügungsgewalt zur Fahrzeugsteuerung von dynamischen Fahraufgaben abgeben,
**b)** mit der Abgabe der Fahrzeugverfügungsgewalten durch die Fahrzeuge (FZ_{übl}, FZ₁...FZₙ) von einer zentralen Steuerungsinstanz (STGE, STER, CPP, PZ, SP, PGM) ein digitaler Fahrbahn-Gefahrenbereich-Zwilling (FGBZ) erzeugt wird, mittels dem infolge der abgegebenen Fahrzeugverfügungsgewalten erste Fahrzeugbewegungen des überlangen Fahrzeugs (FZ_{übl}, FZ₁₅) in vorausschauender Koordination mit zweiten Fahrbahnbewegungen kollisionskritischer Fahrzeuge (FZₖₖ, FZ₇, FZ₁₈, FZ₂₂, FZ₃₀) der anderen Fahrzeuge, deren Fahrbahnbewegungen sich unkoordiniert mit den ersten Fahrzeugbewegungen im Fahrbahn-Gefahrenbereich (FGB, KZ, KZ') kreuzen würden, zum Passieren des Fahrbahn-Gefahrenbereichs (FGB, KZ, KZ') automatisch, dynamisch, fahrzeugkoordiniert und -kollisionsfrei gesteuert werden.

## Beschreibung

Die Erfindung bezieht sich auf ein Verfahren zum Steuern zumindest teilautomatisierter Fahrzeuge, anteilig mit Fahrzeugüberlängen, in einem Fahrbahn-Gefahrenbereich, insbesondere Kreuzungen von Fahrbahnen im Straßenverkehr, gemäß dem Oberbegriff des Patentanspruches 1, ein Computer-Programm-Produkt zum Steuern zumindest teilautomatisierter Fahrzeuge, anteilig mit Fahrzeugüberlängen, in einem Fahrbahn-Gefahrenbereich, insbesondere Kreuzungen von Fahrbahnen im Straßenverkehr, gemäß dem Oberbegriff des Patentanspruches 6, eine zentrale Steuerungseinheit zum Steuern zumindest teilautomatisierter Fahrzeuge, anteilig mit Fahrzeugüberlängen, in einem Fahrbahn-Gefahrenbereich, insbesondere Kreuzungen von Fahrbahnen im Straßenverkehr, gemäß dem Oberbegriff des Patentanspruches 10 und ein Steuerungssystem zum Steuern zumindest teilautomatisierter Fahrzeuge, anteilig mit Fahrzeugüberlängen, in einem Fahrbahn-Gefahrenbereich, insbesondere Kreuzungen von Fahrbahnen im Straßenverkehr, gemäß dem Oberbegriff des Patentanspruches 16.

Ein Gefahrenbereich im Straßenverkehr ist ein Bereich wo eine Gefährdung gegeben ist, die definiert wird als die Möglichkeit, dass eine Person, eine Sache, ein Tier, oder sogar eine natürliche Lebensgrundlage zumindest eines von zeitlich und räumlich auf eine Gefahrenquelle als potentielle Schadensquelle trifft. Dies ist in der Regel im Fahrbahnbereich der Fall, weshalb man auch von einem Fahrbahn-Gefahrenbereich spricht. Ausgehend von diesen Definitionen ist ein typischer wenngleich nicht der einzige Fahrbahn-Gefahrenbereich im Straßenverkehr der Bereich, wo eine oder mehrere Fahrbahnen sich treffen - die Fahrbahn-Kreuzung oder kurz die Kreuzung. In oder an Kreuzungen kann es unter den Verkehrsteilnehmern, die die Kreuzung zur selben Zeit befahren wollen, zu Interessenskonflikten kommen. Es besteht also Regelungsbedarf. Aus diesem Grund sind Kreuzungen derzeit durch Verkehrszeichen, z.B. signalgebende Zeichen in Gestalt von Ampelanlagen, oder durch Verkehrsregeln geschützt.

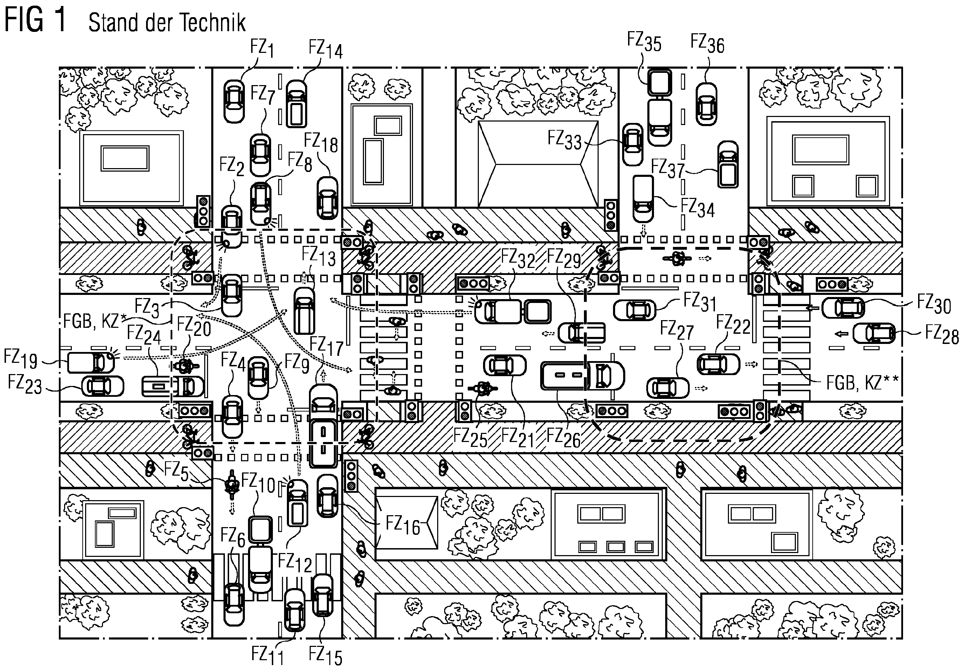

FIGUR 1 zeigt in einem Prinzipschaubild die heutige Situation bei der Regelung eines Fahrbahnverkehrs, z.B. Straßenverkehrs, in Fahrbahn-Gefahrenbereichen FGB in Gestalt einer "Doppel-T"-Kreuzung KZ* oder "T"-Kreuzung KZ**. Zu sehen sind in dem Prinzipschaubild eine Anzahl m motorisierter Fahrzeuge FZ₁...FZₘ mit z.B. m=37, die sich als Verkehrsteilnehmer mit weiteren Verkehrsteilnehmern, wie Fahrradfahrer und Fußgänger, im Straßenverkehr bewegen und dabei die Fahrbahn-Gefahrenbereiche bzw. Kreuzungen FGB, KZ*, KZ** passieren müssen. Um den Verkehrsfluss in diesen Fahrbahn-Gefahrenbereichen bzw. Kreuzungen FGB, KZ*, KZ** zu steuern, gibt es eine Vielzahl von aktueller Verkehrsregelungsmaßnahmen, wie z.B. die bereits vorstehend erwähnten Ampelanlagen, Verkehrsschilder, Zebrastreifen für Fußgänger, Überquerungsstreifen für Fußgänger/Fahrradfahrer, etc., von denen in der FIGUR 1 bis auf die Verkehrsschilder alle dargestellt sind.

So können an der "Doppel-T"-Kreuzung KZ* alle Verkehrsteilnehmer, die sich in "NORD->SÜD- oder SÜD->NORD"-Richtung bewegen, die Kreuzung KZ* passieren, weil die Ampelanlagen für diese Verkehrsteilnehmer das grüne Signalzeichen zeigen, während alle Verkehrsteilnehmer, die sich in "WEST->OST- oder OST->WEST"-Richtung bewegen, die Kreuzung KZ* nicht passieren können, also z.B. an bzw. vor der Ampelanlage warten müssen, weil die Ampelanlagen für diese Verkehrsteilnehmer das rote Signalzeichen zeigen.

Anders verhält es sich an der "T"-Kreuzung KZ**. Dort sind die Verkehrsteilnehmer, die sich in "WEST->OST- oder OST->WEST"-Richtung oder in NORD-Richtung bewegen, aufgrund der Ampelanlagen mit grünem Signalzeichen oder keinem Signalzeichen (gilt für die Fahrzeuge FZ₃₅, FZ₃₆, die in NORD-Richtung unterwegs sind) berechtigt die Kreuzung zu passieren bzw. sich weiterzubewegen, wohingegen die Verkehrsteilnehmer, die in "SÜD"-Richtung unterwegs sind, an bzw. vor der Ampelanlage warten müssen, weil die Ampelanlagen für diese Verkehrsteilnehmer das rote Signalzeichen zeigen.

Was die Automatisierung der motorisierten Fahrzeuge FZ₁...FZ₃₇ in dem Prinzipschaubild anbetrifft, die z.B., wie dargestellt, als Personenkraftwagen und Lastkraftwagen mit unterschiedlichen Fahrzeuglängen und Motorleistungen sowie als Motorrad im Straßenverkehr unterwegs sind, so bleibt - Stand heute - vor dem Hintergrund der von der SAE International (ehemals: Society of Automotive Engineers) in der publizierten Spezifikation SAE J3016 definierten Autonomiestufen für motorisierte Straßenfahrzeuge mit Steuerungssystemen zum Autonomen Fahren, die in sechs SAE-Stufen (Stufe "0" bis Stufe "5") von keiner Automatisierung (Stufe "0"), Assistenzunterstützung (Stufe "1"), Teilautomatisierung (Stufe "2"), Bedingte Automatisierung (Stufe "3"), Hochautomatisierung (Stufe "4") bis Vollautomatisierung (Stufe "5") klassifiziert wird, festzustellen, dass die dargestellten Fahrzeuge FZ₁...FZ₃₆ fast ausnahmslos, bis auf wenige, die der Stufe "2" zugerechnet werden könnten, der Stufe "0" oder der Stufe "1" zuzuordnen sind.

Wenn nun im Sinne der Erfindung zumindest teilautomatisierte Fahrzeuge in dem Fahrbahn-Gefahrenbereich FGB, KZ, KZ' gesteuert werden sollen, so kämen hierfür gemäß der SAE-Autonomiestufendefinition im Prinzip nur Fahrzeuge der Klassifizierungsstufen "3" bis "5" in Frage sowie gegebenenfalls auch solche der Stufe "2".

Wie könnte jetzt eine solche Fahrzeugsteuerung zumindest teilautomatisierter Fahrzeuge in Fahrbahn-Gefahrenbereichen im Straßenverkehr aussehen, wenn nicht mehr die genannten Verkehrsregelungsmaßnahmen, wie z.B. Ampelanlagen, die das Straßenbild im Industriezeitalter geprägt haben, maßgebend für ein zukünftiges Verkehrskonzept im Digitalen Zeitalter sind?

Gemäß einem Vorschlag des Autorenteams "Tachet Remi; Santi, Paolo, Sobolevsky Stanislav; Reyes-Castro, Luis Ignacio;, Frazzoli, Emilio, Helbing, Dirk; Ratti, Carlo" unter dem Titel "Revisiting Street Intersections Using Slot-Based Systems" publiziert March 16, 2016 im Online-Fachmagazin PLoS ONE 11(3): e0149607 und https://doi.org/10.1371/journal.pone.0149607 soll der Verkehrsfluss von autonom fahrenden Fahrzeugen im zukünftigen Straßenverkehr reibungslos und weniger umweltbelastend (Stw.: Abgasausstoß) mit Hilfe eines smarten Steuerungssystems unter dem Namen "Light Traffic" intelligent im Kreuzungsbereich des Straßenverkehrs gesteuert werden, ohne dass dabei weiterhin Ampeln zum Einsatz kommen. Die Kernidee dieses "Light Traffic"-Vorschlages beruht auf dem Ansatz, jedem autonomen Fahrzeug einen Zeitschlitz zum Passieren der Kreuzung, z.B. einer Vierwegekreuzung, zuzuweisen. Auf diese Weise rücken die Fahrzeuge verzögerungslos genau dann im Kreuzungsbereich vor, wenn ein Zeitschlitz frei wird. Dadurch ließe sich nicht nur der Verkehrsfluss erhöhen, sondern es fände auch eine signifikant geringere CO₂-Emission statt, weil zum einen deutlich mehr Fahrzeuge (ca. doppelt so viele Fahrzeuge) im Vergleich zur herkömmlichen Ampel-Steuerung an einer Kreuzung diese passieren könnten und zum anderen bedingt dadurch nahezu keine Stand-Wartezeit mehr auftreten, wie sie noch an Ampeln herkömmlichen Ampel-Steuerungen von Kreuzungen entstehen.

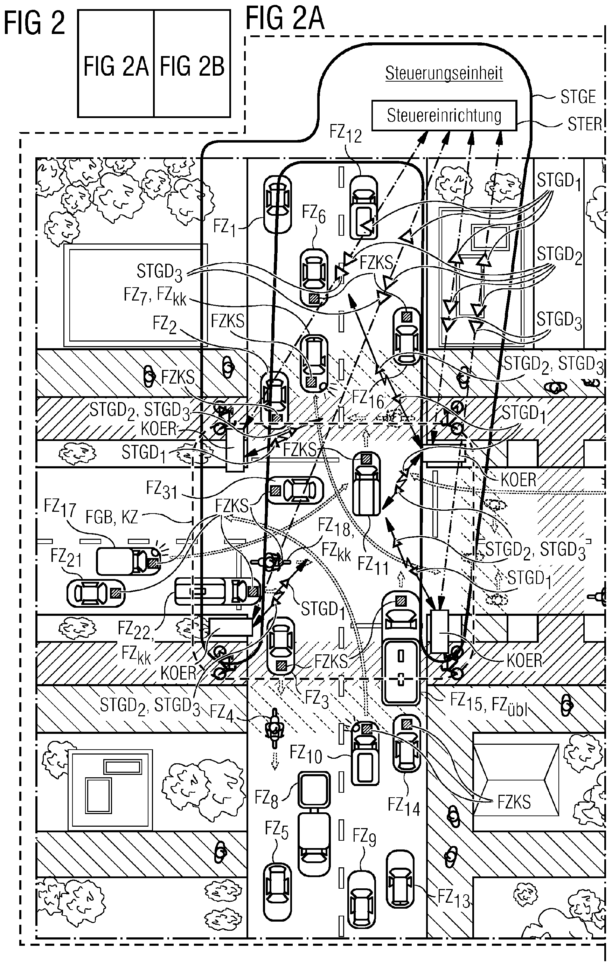

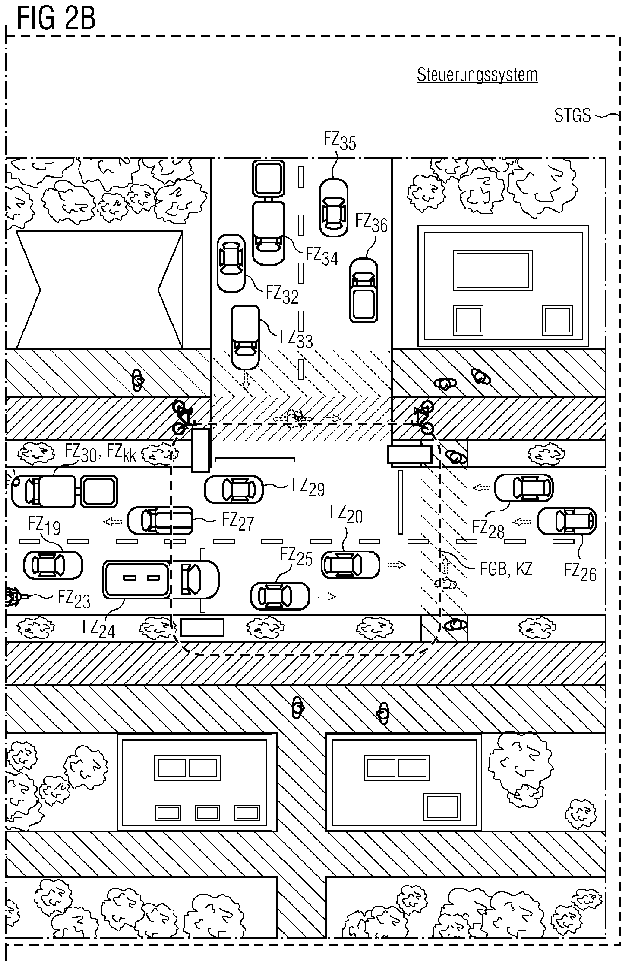

Voraussetzung für ein derartiges Konzept ist allerdings, dass erstens die Verkehrsinfrastruktur angepasst wird, z.B. in Städten durch teure Baumaßnahmen (vgl. Beschreibung von FIGUR 2), und zweitens nahezu ausschließlich autonom betriebene Fahrzeuge am Verkehr teilnehmen, die zudem mit modernster Kommunikations- und Sensortechnologie ausgerüstet sind. Eine zum Steuern zumindest teilautomatisierter Fahrzeuge in einem Fahrbahn-Gefahrenbereich, insbesondere Kreuzungen von Fahrbahnen im Straßenverkehr, gesonderte Betrachtung von Fahrzeugen mit Fahrzeugüberlängen findet in der veröffentlichten Publikation nicht statt.

In der nachveröffentlichten DE-Patentanmeldung (Anmeldeaktenzeichen: 10 2018 209 790.9) ist eine Steuereinrichtung zum Steuern eines Fahrzeugs in einem Gefahrenbereich offenbart, die
- eine Ermittlungseinheit zum Ermitteln, ob sich das Fahrzeug in dem Gefahrenbereich oder in einem an dem Gefahrenbereich angrenzenden Übergangsbereich befindet;
- eine Kommunikationseinheit zum Empfangen von Fahrzeugdaten von dem Fahrzeug, falls die Ermittlungseinheit ermittelt, dass sich das Fahrzeug in dem Gefahrenbereich oder in dem Übergangsbereich befindet; und
- eine Bestimmungseinheit zum Bestimmen einer Trajektorie für das Fahrzeug unter Berücksichtigung der empfangenen Fahrzeugdaten, um das Fahrzeug kollisionsfrei durch den Gefahrenbereich zu führen;
- eine dem Gefahrenbereich zugehörige Einrichtung ist, die die Steuerung der Fahrzeuge in dem Gefahrenbereich übernimmt, wodurch Kollisionen in dem Gefahrenbereich verhindert werden können.

Auch in dieser nachveröffentlichten DE-Patentanmeldung spielt die gesonderte Betrachtung von Fahrzeugen mit Fahrzeugüberlängen keine Rolle.

Die der Erfindung zugrundeliegende Aufgabe besteht darin, ein Verfahren, ein Computer-Programm-Produkt, eine zentrale Steuerungseinheit und ein Steuerungssystem zum Steuern zumindest teilautomatisierter Fahrzeuge, anteilig mit Fahrzeugüberlängen, in einem Fahrbahn-Gefahrenbereich, insbesondere Kreuzungen von Fahrbahnen im Straßenverkehr, anzugeben, bei dem bzw. der die Fahrzeuge mit Fahrzeugüberlänge derart gesteuert werden, dass diese in einem fließenden Fahrfluss ohne Anhalt-Anfahr-Unterbrechungen, wie sie beispielsweise durch zeichengebenden Anlagen, vorzugsweise Ampeln, entstehen, den Fahrbahn-Gefahrenbereich passieren können.

Die vorliegende Patentanmeldung behandelt im Unterschied zu der der Patentanmeldung (Anmeldung-Nr......) mit der Bezeichnung "Verfahren, Computer-Programm-Produkt, Zentrale Steuerungseinheit und Steuerungssystem zum Steuern zumindest teilautomatisierter Fahrzeuge in einem Fahrbahn-Gefahrenbereich, insbesondere Kreuzungen von Fahrbahnen im Straßenverkehr", die einen Normalfall bei einer derartigen Fahrzeugsteuerung im Fahrbahn-Gefahrenbereich darstellt und deren Inhalt hiermit in der vorliegenden Patentanmeldung inkludiert und offenbart ist, einen Spezialfall, bei dem das zumindest teilautomatisierte Fahrzeug, was den Fahrbahn-Gefahrenbereich bzw. die Kreuzung passieren möchte, eine Fahrzeugüberlänge aufweist.

Die vorstehend bezeichnete Aufgabe wird ausgehend von dem im Oberbegriff des Patentanspruches 1 definierten Verfahren durch die im Kennzeichen des Patentanspruches 1 angegebenen Merkmale gelöst.

Darüber hinaus wird die Aufgabe ausgehend von dem im Oberbegriff des Patentanspruches 6 definierten Computer-Programm-Produkt durch die im Kennzeichen des Patentanspruches 6 angegebenen Merkmale gelöst.

Weiterhin wird die Aufgabe ausgehend von der im Oberbegriff des Patentanspruches 10 definierten, zentralen Steuerungseinheit durch die im Kennzeichen des Patentanspruches 10 angegebenen Merkmale gelöst.

Außerdem wird die Aufgabe ausgehend von dem im Oberbegriff des Patentanspruches 16 definierten Steuerungssystem durch die im Kennzeichen des Patentanspruches 16 angegebenen Merkmale gelöst.

Die der Erfindung zugrundeliegende Idee gemäß der in den Ansprüchen 1, 6, 10 und 16 jeweils angegebenen technischen Lehre besteht darin, dass in einem Fahrbahn-Gefahrenbereich, insbesondere Kreuzungen von Fahrbahnen im Straßenverkehr, zum Steuern zumindest teilautomatisierter Fahrzeuge, anteilig mit Fahrzeugüberlängen,
- mindestens ein in Bezug auf Fahrzeuglänge überlanges Fahrzeug und jedes andere Fahrzeug der Fahrzeuge beim Sich-Nähern des Fahrbahn-Gefahrenbereichs zum Passieren desjenigen eine Fahrzeugverfügungsgewalt zur Fahrzeugsteuerung von dynamischen Fahraufgaben abgeben,
- mit der Abgabe der Fahrzeugverfügungsgewalten durch die Fahrzeuge von einer zentralen Steuerungsinstanz ein digitaler Fahrbahn-Gefahrenbereich-Zwilling erzeugt wird, mittels dem infolge der abgegebenen Fahrzeugverfügungsgewalten erste Fahrzeugbewegungen des überlangen Fahrzeugs in vorausschauender Koordination mit zweiten Fahrbahnbewegungen kollisionskritischer Fahrzeuge der anderen Fahrzeuge, deren Fahrbahnbewegungen sich unkoordiniert mit den ersten Fahrzeugbewegungen im Fahrbahn-Gefahrenbereich kreuzen würden, zum Passieren des Fahrbahn-Gefahrenbereichs automatisch, dynamisch, fahrzeugkoordiniert und -kollisionsfrei gesteuert werden.

Mit einer derartig durchgeführten Steuerung von zumindest teilautomatisierten Fahrzeugen in dem Fahrbahn-Gefahrenbereich, anteilig mit Fahrbahnwechselabsichten, die die Fahrbahn wechseln wollen, braucht der Verkehr nicht mehr unterbrochen zu werden. Darüber hinaus sind keine Verkehrsregelungsmaßnahmen, wie z.B. Ampelanlagen, Verkehrsschilder, Zebrastreifen für Fußgänger, etc., mehr erforderlich. Weiterhin besteht keine Notwendigkeit für eine fest vorgegebene Fahrzeugbewegungsrichtung. Diese kann vielmehr genauso wie die Fahrzeuggeschwindigkeit beim Passieren des Fahrbahn-Gefahrenbereichs dynamisch je nach Verkehrssituation adaptiert werden.

Die Fahrzeugverfügungsgewalten sämtlicher Fahrzeuge, der mit Fahrzeugüberlänge und der Anderen, werden dabei bevorzugt mit Hilfe von ersten Steuerungsdaten abgegeben, die jedes Fahrzeug beim Sich-Nähern des Fahrbahn-Gefahrenbereichs der zentralen Steuerungsinstanz übermittelt.

Das infolge der abgegebenen Fahrzeugverfügungsgewalten Steuern der ersten Fahrzeugbewegungen des überlangen Fahrzeugs in vorausschauender Koordination mit zweiten Fahrbahnbewegungen kollisionskritischer Fahrzeuge erfolgt bevorzugt mit Hilfe von zweiten Steuerungsdaten, die dem überlangen Fahrzeug zum Passieren des Fahrbahn-Gefahrenbereichs von der zentralen Steuerungsinstanz übermittelt werden.

Die zentrale Steuerungsinstanz ist dabei vorzugsweise eine zentrale Steuerungseinheit bestehend aus Steuereinrichtung mit einem Computer-Programm-Produkt, das einen nicht-flüchtigen, lesbaren Speicher, in dem prozessorlesbare Steuerprogrammbefehle eines die Fahrzeugsteuerung durchführenden Programm-Moduls gespeichert sind, und einem mit dem Speicher verbundenen Prozessor, der die Steuerprogrammbefehle des Programm-Moduls zur Fahrzeugsteuerung ausführt, einer Steuerschnittstelle und mindestens einer Kommunikationseinrichtung, die kommunikationstechnisch entweder mit der Steuereinrichtung und darin mit dem Computer-Programm-Produkt über die Steuerschnittstelle verbunden ist oder der Steuereinrichtung und dem Computer-Programm-Produkt darin zugeordnet ist.

Gemäß der "Oder"-Option ist die Steuereinrichtung vorzugsweise und in vorteilhafter Weise als eine offene Cloud Computing Plattform ausgebildet.

Die Kommunikationseinrichtung ist in beiden Fällen in dem Fahrbahn-Gefahrenbereich derart angeordnet, dass diese zur Fahrzeugsteuerung jeweils mit einer in den Fahrzeugen jeweils enthaltenen Fahrzeug-Kommunikationsschnittstelle verbunden ist. Diese Verbindung ist bevorzugt funktechnischer Natur, so z.B. ausgebildet nach einem Mobilfunkstandard der Generation 5G. Die Anzahl der Kommunikationseinrichtungen besteht in dem Fahrbahn-Gefahrenbereich, z.B. in einer "Doppel-T"-Kreuzung (vgl. FIGUREN 1 und 2), vorzugsweise aus vier einzelnen Kommunikationseinrichtungen, die an allen vier Kreuzungsecken positioniert sind, um immer eine optimale Funkverbindung zu den Fahrzeugen bzw. der jeweiligen Fahrzeug-Kommunikationsschnittstelle zu haben.

Dynamisch, fahrzeugkoordiniert und kollisionsfrei im Kontext der Erfindung bedeutet dabei, dass die ersten Fahrzeugbewegungen des überlangen Fahrzeugs mit Fahrbewegungen der übrigen Fahrzeuge und im Besonderen in vorausschauender Koordination mit den zweiten Fahrbahnbewegungen der kollisionskritischen Fahrzeuge in dem Fahrbahn-Gefahrenbereich mittels des digitalen Fahrbahn-Gefahrenbereich-Zwillings an jeden Ort und zu jedem Zeitpunkt so koordiniert werden, dass das jeweilige Fahrzeug ohne jegliche Kollision mit den übrigen Fahrzeugen den Fahrbahn-Gefahrenbereich passiert. Mit Hilfe des digitalen Fahrbahn-Gefahrenbereich-Zwillings wird also jedes Fahrzeug nach Maßgabe eines räumlich-zeitlichen Bewegungsmusters in dem Fahrbahn-Gefahrenbereich so bewegt, dass sichergestellt ist, dass alle Fahrzeuge in dem Fahrbahn-Gefahrenbereich, die die Fahrzeugverfügungsgewalt zur Fahrzeugsteuerung der dynamischen Fahraufgaben abgeben haben, diesen kollisionsfrei passieren können.

Bei dieser Art der Fahrzeugsteuerung ist es gemäß einer Weiterbildung der Erfindung von Vorteil, dass bereits im Vorfeld (vgl. Ansprüche 2 und 11), wenn jedes Fahrzeug sich dem Fahrbahn-Gefahrenbereich nähert, das Abgeben der Fahrzeugverfügungsgewalt mittels eines Handshake-Protokolls zwischen dem jeweiligen Fahrzeug und der zentralen Steuerungsinstanz vereinbart wird. Im Zuge dieses Handshake-Protokolls erfolgt dann auch die Übermittlung der ersten Steuerungsdaten.

Darüber hinaus ist es gemäß einer weiteren Weiterbildung der erfindungsgemäßen Fahrzeugsteuerung vorteilhaft (vgl. Ansprüche 3, 7 und 12), dass für die Erzeugung des digitalen Fahrbahn-Gefahrenbereich-Zwillings zur Fahrzeugsteuerung infolge der abgegebenen Fahrzeugverfügungsgewalt von jedem Fahrzeug der Fahrzeuge Fahrzeugtrajektorie und Fahrzeuggeschwindigkeit ermittelt werden.

Darüber hinaus ist es für die Weiterbildung der erfindungsgemäßen Fahrzeugsteuerung zweckmäßig (vgl. Ansprüche 4, 8 und 13), dass mit der Erzeugung des digitalen Fahrbahn-Gefahrenbereich-Zwillings Fahrzeugfahrtinformationen, aus und in welche Fahrtrichtungen sich die Fahrzeuge zum Passieren des Fahrbahn-Gefahrenbereichs auf diesen zubewegen, in einem Rasterformat mit schachbrettartig abwechselnden Formatfeldern digital repräsentiert werden.

Bei dieser vorteilhaften, schachbrettartigen Repräsentation, was die Koordination bei der Fahrzeugsteuerung anbetrifft, repräsentieren ein Kernbereich des Rasterformats den Fahrbahn-Gefahrenbereich sowie erste Formatfelder des Rasterformats formatfeldwechselabhängig entweder "WEST->OST- und/oder OST->WEST"-Fahrzeugbewegungsrichtungen oder "NORD->SÜD- und/oder SÜD->NORD"-Fahrzeugbewegungsrichtungen und zweite Formatfelder des Rasterformats formatfeldwechselabhängig entweder "NORD->SÜD- und/oder SÜD->NORD"-Fahrzeugbewegungsrichtungen oder "WEST->OST- und/oder OST->WEST"-Fahrzeugbewegungsrichtungen mit jeweils höchstens einem Fahrzeug pro erstem Formatfeld bzw. zweitem Formatfeld.

Für die auf der Basis des digitalen Fahrbahn-Gefahrenbereich-Zwillings durchgeführte Fahrzeugsteuerung wird jede erste Fahrzeugbewegung des überlangen Fahrzeugs in der vorausschauender Koordination mit den zweiten Fahrbahnbewegungen der kollisionskritischen Fahrzeuge der anderen Fahrzeuge zum Passieren des Fahrbahn-Gefahrenbereichs dadurch infolge der abgegebenen Fahrzeugverfügungsgewalten automatisch, dynamisch, fahrzeugkoordiniert und -kollisionsfrei gesteuert, dass korrespondierend zu der Situation im Fahrbahn-Gefahrenbereich - das fahrbahnwechselwillige Fahrzeugs wie jedes andere Fahrzeug der Fahrzeuge im Kernbereich des Rasterformats gemäß einer Digitalbewegung mit einem START-Punkt und einem ZIEL-Punkt in dem Rasterformat, die auf einem Formatfeldwechsel beruht, entweder
von einem ersten Formatfeld der ersten Formatfelder als den START-Punkt der Digitalbewegung auf ein benachbartes zweites Formatfeld der zweiten Formatfelder als den ZIEL-Punkt der Digitalbewegung, das kein Fahrzeug der Fahrzeuge repräsentiert - also digital frei für die Digitalbewegung ist, oder
von einem zweiten Formatfeld der zweiten Formatfelder als den START-Punkt der Digitalbewegung auf ein benachbartes erstes Formatfeld der ersten Formatfelder als den ZIEL-Punkt der Digitalbewegung, das kein Fahrzeug der Fahrzeuge repräsentiert
- also digital frei für die Digitalbewegung ist,
   digital bewegt wird,
- in dem Rasterformat für die Digitalbewegungen in dem Kernbereich in einer Bewegungsrichtung des überlangen Fahrzeugs eine durch die Fahrzeuglänge des überlangen Fahrzeugs vorgegebene Anzahl von Formatfeldern digital frei gemacht oder digital frei gehalten wird,
- die Formatfelder in dem Kernbereich des Rasterformats für Digitalbewegungen in Bewegungsrichtungen der kollisionskritischen Fahrzeugen, die aufgrund der Fahrzeuglänge des überlangen Fahrzeugs zu Kollisionen zwischen dem überlangen Fahrzeug und den kollisionskritischen Fahrzeugen führen würden, digital frei gemacht oder digital frei gehalten werden.

Das digitale Freimachen oder digitale Freihalten der Formatfelder bleibt selbstverständlich nicht auf der digitalen Ebene beschränkt, sondern korrespondierend dazu werden durch entsprechende Fahrzeugsteuerung infolge das Abgebens der Fahrzeugverfügungsgewalten auch die Stellen in dem Fahrbahn-Gefahrenbereich vom realen, tatsächlichen Fahrzeugverkehr entsprechend freigemacht oder freigehalten.

Wenn mit einer letzten Digitalbewegung in dem Rasterformat das Fahrzeug digital den Kernbereich des Rasterformats verlässt und es damit den Fahrbahn-Gefahrenbereich passiert hat, dann wird für die vorteilhafte Weiterbildung der erfindungsgemäßen Fahrzeugsteuerung (vgl. Ansprüche 5, 9 und 14), dass die Fahrzeugverfügungsgewalt dem überlangen Fahrzeugs von der zentralen Steuerungsinstanz zurückgegeben. Dies kann auf einfache und in vorteilhafter Weise mit Hilfe eines weiteren Handshake-Protokolls erreicht werden. Im Zuge dieses weiteren Handshake-Protokolls werden dem Fahrzeug dann die Rückgabe der Fahrzeugverfügungsgewalt initiierende, dritte Steuerungsdaten übermittelt.

Weitere Vorteile der Erfindung ergeben sich aus der nachfolgenden Beschreibung eines Ausführungsbeispieles der Erfindung ausgehend von der FIGUR 1, die einen Stand der Technik zur Fahrzeugsteuerung zumindest teilautomatisierter Fahrzeuge Kreuzungsbereich des Straßenverkehrs, zeigt, anhand der FIGUREN 2 bis 6 erläutert. Diese zeigen:
FIGUR 2 auf der Basis von der FIGUR 1 ein Steuerungssystem zum Steuern zumindest teilautomatisierter Fahrzeuge in einem Fahrbahn-Gefahrenbereich, insbesondere Kreuzungen von Fahrbahnen im Straßenverkehr,

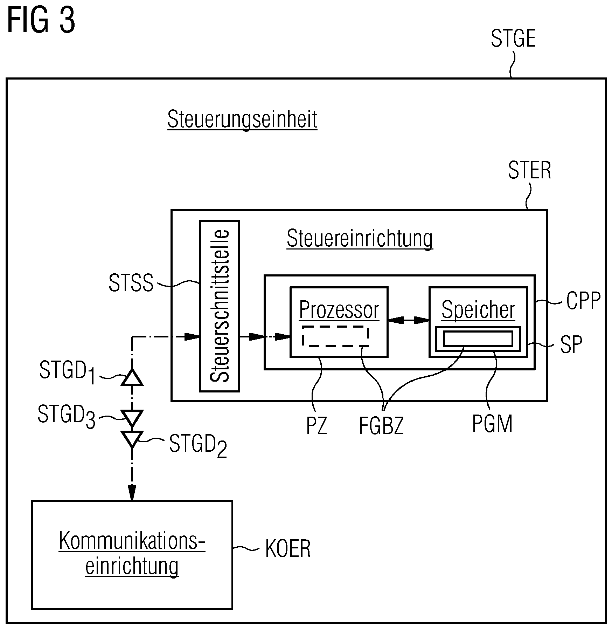

FIGUR 3 den prinzipiellen Aufbau einer Steuereinrichtung in einer Steuerungseinheit des in der FIGUR 2 dargestellten Steuerungssystems zur Fahrzeugsteuerung durch Erzeugung eines Fahrbahn-Gefahrenbereich-Zwillings,

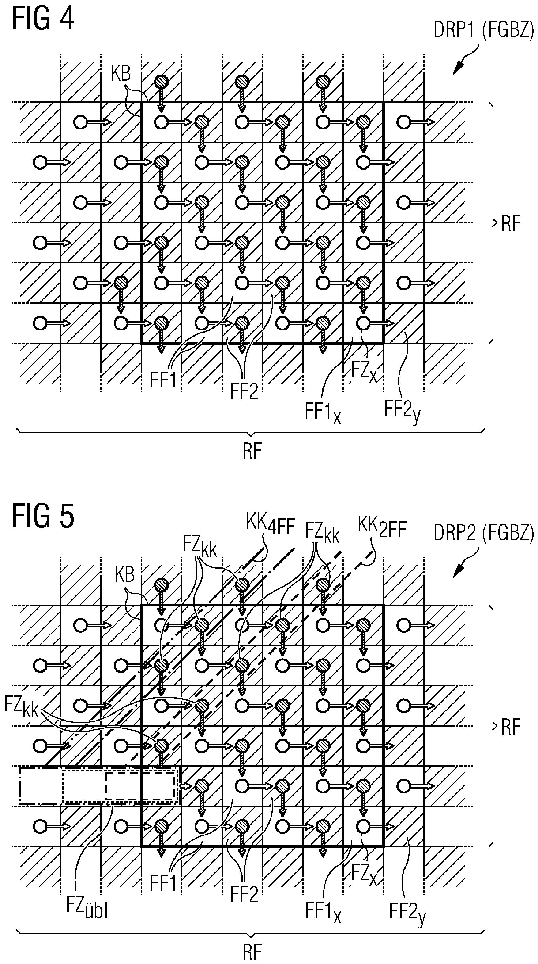

FIGUR 4 eine durch den Fahrbahn-Gefahrenbereich-Zwilling, bei dessen Erzeugung in der Steuereinrichtung bzw. dem Computer-Programm-Produkt nach FIGUR 3, geschaffene erste Digitale Repräsentation einer ersten Verkehrssituation mit einem durch zumindest teilautomatisierte, motorisierte Fahrzeuge ohne Fahrzeugüberlänge vollständig befahrenen und belegten Fahrbahn-Gefahrenbereich in Gestalt einer "Doppel-T"-Kreuzung,
FIGUR 5 eine durch den Fahrbahn-Gefahrenbereich-Zwilling, bei dessen Erzeugung in der Steuereinrichtung bzw. dem Computer-Programm-Produkt nach FIGUR 3, geschaffene zweite Digitale Repräsentation einer zweiten Verkehrssituation mit einem durch zumindest teilautomatisierte, motorisierte Fahrzeuge, die anteilig eine Fahrzeugüberlänge aufweisen, vollständig befahrenen und belegten Fahrbahn-Gefahrenbereich in Gestalt einer "Doppel-T"-Kreuzung.

FIGUR 2 zeigt auf der Basis von der FIGUR 1 die zukünftige, gegenüber der heutigen Situation modifizierte Situation bei der Regelung eines Fahrbahnverkehrs, z.B. Straßenverkehrs, in den Fahrbahn-Gefahrenbereichen FGB in Gestalt einer "DoppelT"-Kreuzung KZ oder einer "T"-Kreuzung KZ'. Die Modifikation besteht darin, dass der Straßenverkehr in zumindest teilautomatisierte und motorisierte Verkehrsteilnehmer und solche, die nicht automatisiert sind und auch unter Umständen nicht motorisiert sind, unterteilt ist und die Regelung des Fahrbahn-/Straßenverkehrs in den Fahrbahn-Gefahrenbereichen bzw. Kreuzungen FGB, KZ, KZ' ohne jegliche Verkehrsregelungsmaßnahmen, wie z.B. Ampelanlagen, Verkehrsschilder, Zebrastreifen für Fußgänger, Überquerungsstreifen für Fußgänger/Fahrradfahrer, etc. auskommt. Um aber dennoch den Fahrbahn-/Straßenverkehr im Gefahren-/Kreuzungsbereich FGB, KZ, KZ' regeln zu können ist gemäß der FIGUR 2 zu diesem Zweck ein Steuerungssystem STGS vorhanden. In diesem Steuerungssystem STGS werden die nicht automatisierten und bedingt motorisierten Verkehrsteilnehmer, wie Fußgänger, Radfahrer, Elektro-Radfahrer, etc., in den Fahrbahn-Gefahrenbereichen FGB, KZ, KZ' zur Fahrbahnüberquerung ober- oder unterhalb der Fahrbahnen für die zumindest teilautomatisierten und motorisierten Verkehrsteilnehmer geführt.

Gemäß der FIGUR 2 sind entsprechende Fahrrad- und Fußgängerüberquerungsstreifen unter die Fahrbahnen im Gefahren-/Kreuzungsbereich FGB, KZ, KZ' gelegt und geführt, was durch entsprechend gestrichelte Streifenabschnitte in dem Gefahren-/Kreuzungsbereich FGB, KZ, KZ' dargestellt ist. Diese Vorkehrungen sind z.B. Teil der teuren Baumaßnahmen, von denen im Beitrag des Online-Fachmagazin PLoS ONE 11(3): e0149607 und https://doi.org/10.1371/journal.pone.0149607 die Rede ist. Darüber hinaus enthält das in der FIGUR 2 dargestellte Steuerungssystem STGS zum Steuern einer Anzahl n zumindest teilautomatisierter, motorisierter Fahrzeuge FZ₁...FZₙ mit z.B. n=36 in den Fahrbahn-Gefahrenbereichen bzw. Kreuzungen FGB, KZ, KZ' mindestens eine zentrale Steuerungseinheit STGE.

Die zumindest teilautomatisierten, motorisierten Fahrzeuge FZ₁...FZ₃₆ verteilen sich in der dargestellten Weise auf die als "Doppel-T"-Kreuzung KZ und als "T"-Kreuzung KZ' ausgestalteten Fahrbahn-Gefahrenbereiche FGB. Für die Fahrzeugsteuerung zumindest teilautomatisierter, motorisierter Fahrzeuge im Fahrbahn-Gefahrenbereich kommen gemäß der Ausführungen im Zusammenhang mit der Beschreibung der FIGUR 1 nur Fahrzeuge der Klassifizierungsstufen "3" bis "5" in Frage sowie gegebenenfalls auch solche der Stufe "2".

Die in der FIGUR 2 exemplarische dargestellte zentrale Steuerungseinheit STGE des Steuerungssystems STGS ist gemäß dieser Darstellung ausschließlich für die Fahrzeugsteuerung zumindest teilautomatisierter, motorisierter Fahrzeuge im als "Doppel-T"-Kreuzung KZ ausgestalteten Fahrbahn-Gefahrenbereich FGB zuständig. Die Fahrzeugsteuerung des als "T"-Kreuzung KZ' ausgestalteten Fahrbahn-Gefahrenbereiche FGB und jedes weiteren Fahrbahn-Gefahrenbereichs FGB in dem Steuerungssystem STGS, beides in der FIGUR 2 nicht explizit dargestellt, kann entweder auch von der dargestellten Steuerungseinheit STGE oder aber jeweils von weiteren, nicht dargestellten Steuerungseinheiten übernommen werden.

Im Folgenden soll für die generelle Fahrzeugsteuerung zumindest teilautomatisierter, motorisierter Fahrzeuge in Fahrbahn-Gefahrenbereichen des Steuerungssystems STGS stellvertretend der als "Doppel-T"-Kreuzung KZ ausgestaltete Fahrbahn-Gefahrenbereich FGB näher betrachtet werden. Im Unterschied zu der "Doppel-T"-Kreuzung KZ* in der FIGUR 1 bewegt sich eine sich dynamisch verändernde und kontinuierlich bewegende Anzahl von Fahrzeugen der zumindest teilautomatisierten, motorisierten Fahrzeuge FZ₁...FZ₃₆, die wieder als Personenkraftwagen und Lastkraftwagen mit unterschiedlichen Fahrzeuglängen und Motorleistungen sowie als Motorrad in "WEST->OST- oder OST->WEST"-Fahrzeugbewegungsrichtungen sowie "NORD->SÜD- oder SÜD->NORD"-Fahrzeugbewegungsrichtungen unterwegs sind, auf die "Doppel-T"-Kreuzung KZ zu, an der "Doppel-T"-Kreuzung KZ, in der "Doppel-T"-Kreuzung KZ und von der "Doppel-T"-Kreuzung KZ weg und zwar ohne jegliche Steuerung durch Ampelanlagen, Verkehrszeichen, etc. und ohne hierdurch entstehende Anhalt-Anfahr-Unterbrechungen des Verkehrsfluss wie noch bei der Verkehrsregelung gemäß der FIGUR 1. Diese Steuerung in dem Steuerungssystem STGS soll jetzt durch die zentrale Steuerungseinheit STGE erfolgen.

Die zentralen Steuerungseinheit STGE weist für diese Fahrzeugsteuerung eine Steuereinrichtung STER und mindestens eine Kommunikationseinrichtung KOER auf, die kommunikationstechnisch entweder miteinander verbunden oder einander zugeordnet sind.

Gemäß der "Oder"-Option ist die Steuereinrichtung STER vorzugsweise und in vorteilhafter Weise als eine offene Cloud Computing Plattform ausgebildet.

Die Kommunikationseinrichtung KOER ist vorzugsweise eine für den Mobilfunkstandard der 5. Generation (5G) ausgelegte Funkkommunikationseinrichtung und ist in beiden Fällen ("Entweder"-Option und "Oder"-Option) in dem als "Doppel-T"-Kreuzung KZ ausgestaltete Fahrbahn-Gefahrenbereich FGB anzahlmäßig und anordnungstechnisch derart angeordnet, dass der Gefahren-/Kreuzungsbereich FGB, KZ funktechnisch optimal abgedeckt ist und zwar so, dass die sich in dem Gefahren-/Kreuzungsbereich FGB, KZ befindenden, zumindest teilautomatisierten, motorisierten Fahrzeuge jederzeit zur Fahrzeugsteuerung via Funk erreich- und ansprechbar sind. Für den dargestellten Gefahren-/Kreuzungsbereich FGB, KZ sind es beispielsweise vier einzelne Kommunikationseinrichtungen bzw. Funkkommunikationseinrichtungen KOER, die an allen vier Kreuzungsecken positioniert sind, um immer eine optimale Funkverbindung zu den Fahrzeugen im Gefahren-/Kreuzungsbereich FGB, KZ zu haben.

Von den 36 in dem Steuerungssystem STGS der FIGUR 2 dargestellten, teilautomatisierten, motorisierten Fahrzeugen FZ₁...FZ₃₆ haben die Fahrzeuge FZ₁...FZ₁₉, FZ₃₀, FZ₃₁ einen fahrttechnischen Bezug zu der "Doppel-T"-Kreuzung KZ als sie sich entweder auf die Kreuzung KZ zubewegen oder von dieser wegbewegen oder die "Doppel-T"-Kreuzung KZ gerade aktuell befahren. Und von dieser Teilanzahl von Fahrzeugen FZ₁...FZ₁₉, FZ₃₀, FZ₃₁ gibt es anteilig wiederum mindestens ein Fahrzeug FZ_{übl}, das eine Fahrzeugüberlänge aufweist. In der FIGUR 2 ist dies das Fahrzeug FZ_{übl}, FZ₁₅. Allen genannten Fahrzeugen gemeinsam ist, dass sie die "Doppel-T"-Kreuzung KZ kollisionsfrei passieren wollen.

Neben dem überlangen Fahrzeug FZ_{übl}, FZ₁₅ sind von den "Doppel-T"-Kreuzung bezogenen Fahrzeugen für das Passieren der "Doppel-T"-Kreuzung KZ durch das überlange Fahrzeug FZ_{übl}, FZ₁₅ insbesondere die Fahrzeuge von Interesse, die für dieses Kreuzungsüberquerung potentiell Kollisionen mit dem überlangen Fahrzeug FZ_{übl}, FZ₁₅ haben könnten, also kollisionskritisch sind. Kollisionskritische Fahrzeuge FZₖₖ gemäß der Darstellung in der FIGUR 2 sind die Fahrzeuge FZ₇, FZ₁₈, FZ₂₂, FZ₃₀. Stellvertretend für alle übrigen "Doppel-T"-Kreuzung bezogenen Fahrzeuge werden diese kollisionskritischen Fahrzeuge FZₖₖ, FZ₇, FZ₁₈, FZ₂₂, FZ₃₀ und im Weiteren für die Fahrzeugsteuerung zusammen mit dem überlangen Fahrzeug FZ_{übl}, FZ₁₅ näher betrachtet.

Zur Fahrzeugsteuerung des überlangen Fahrzeugs FZ_{übl}, FZ₁₅ in dem Gefahren-/Kreuzungsbereich FGB, KZ ist es erforderlich, dass sowohl das überlange Fahrzeug FZ₁₅ als auch die kollisionskritischen Fahrzeuge FZₖₖ, FZ₇, FZ₁₈, FZ₂₂, FZ₃₀ erreich- und ansprechbar sind. Für die Erreich- und Ansprechbarkeit der betrachteten Fahrzeuge weisen diese allesamt jeweils eine Fahrzeug-Kommunikationsschnittstelle FZKS auf, die vorzugsweise, wie die Funkkommunikationseinrichtung KOER, eine für den Mobilfunkstandard der 5. Generation (5G) ausgelegte Fahrzeug-Funkkommunikationsschnittstelle ist.

Das überlange Fahrzeug FZ_{übl}, FZ₁₅ und jedes kollisionskritische Fahrzeug FZₖₖ, FZ₇, FZ₁₈, FZ₂₂, FZ₃₀, die sich alle auf die "Doppel-T"-Kreuzung KZ zubewegen und diese überqueren wollen, geben dann, wenn sie sich dem Gefahren-/Kreuzungsbereich FGB, KZ zum Passieren des Fahrbahn-Gefahrenbereichs FGB bzw. der "Doppel-T"-Kreuzung KZ nähern, eine Fahrzeugverfügungsgewalt zur Fahrzeugsteuerung von dynamischen Fahraufgaben in dem jeweiligen Fahrzeug ab.

Durch das temporäre Abgeben der Fahrzeugverfügungsgewalt zum Passieren des Fahrbahn-Gefahrenbereichs FGB bzw. der "DoppelT"-Kreuzung KZ tritt das besagte Fahrzeug die Steuerungshoheit in Bezug auf das Überqueren des Gefahren-/Kreuzungsbereichs FGB, KZ an eine externe zentrale Steuerungsinstanz, hier die zentrale Steuerungseinheit STGE, ab. Je nach Autonomielevel fürs Autonome Fahren bedeutet dies, dass der Fahrer des die Steuerungshoheit abtretenden Fahrzeugs keine Macht und Kontrolle mehr über sein Fahrzeug KZ hat und er bestenfalls nur noch Erfüllungsgehilfe ist, was die Fahrzeugsteuerung der dynamischen Fahraufgaben im Fahrzeug zum Überqueren des Gefahren-/Kreuzungsbereichs FGB, KZ anbetrifft.

Mit dem Ausdruck "sich nähern" ist gemeint, dass das Fahrzeug rechtzeitig vor dem Eintritt des Fahrzeugs in den Gefahren-/Kreuzungsbereich FGB, KZ die Fahrzeugverfügungsgewalt abgegeben haben muss, weil ansonsten eine kollisionsfreie Fahrzeugsteuerung in dem Gefahren-/Kreuzungsbereich FGB, KZ nicht sichergestellt werden kann. Um die Pufferzone für das Abgeben der Fahrzeugverfügungsgewalt zu erweitern, ist es vorteilhaft, wenn bereits im Vorfeld des Sich-Näherns das Abgeben der Fahrzeugverfügungsgewalt mittels eines Handshake-Protokolls zwischen dem überlangen Fahrzeug FZ_{übl}, FZ₁₅ sowie jedem kollisionskritischen Fahrzeug FZₖₖ, FZ₇, FZ₁₈, FZ₂₂, FZ₃₀ und der zentralen Steuerungsinstanz bzw. der Steuerungseinheit STGE vereinbart wird. Diese "Handshake-Protokoll"-mäßige Vereinbarung erfolgt kommunikationstechnisch einerseits über die Funkverbindung zwischen der Fahrzeug-Kommunikationsschnittstelle bzw. Fahrzeug-Funkkommunikationsschnittstelle FZKS und der Kommunikationseinrichtung bzw. Funkkommunikationseinrichtung KOER und andererseits zwischen der Kommunikationseinrichtung KOER und der Steuereinrichtung STER.

Die Fahrzeugverfügungsgewalt wird dabei jeweils bevorzugt mit Hilfe von ersten Steuerungsdaten STGD₁ abgegeben, die jedes der genannten Fahrzeuge FZ_{übl}, FZ₁₅, FZₖₖ, FZ₇, FZ₁₈, FZ₂₂, FZ₃₀ beim Sich-Nähern des Gefahren-/Kreuzungsbereichs FGB, KZ oder im Vorfeld des Sich-Näherns kommunikationstechnisch, über den vorstehend aufgezeigten Übertragungsweg der Steuereinrichtung STER in der zentralen Steuerungseinheit STGE übermittelt. Diese ersten Steuerungsdaten STGD₁ werden, wenn bereits im Vorfeld des Sich-Näherns das Abgeben der Fahrzeugverfügungsgewalt vereinbart wird, im Zuge des Handshake-Protokolls der Steuereinrichtung STER in der zentralen Steuerungseinheit STGE übermittelt.

FIGUR 3 zeigt den prinzipiellen Aufbau der Steuereinrichtung STER in der Steuerungseinheit STGE des in der FIGUR 2 dargestellten Steuerungssystems STGS zur Fahrzeugsteuerung durch Erzeugung eines Fahrbahn-Gefahrenbereich-Zwillings FGBZ. Die Steuereinrichtung STER weist eine Steuerschnittstelle STSS und ein Computer-Programm-Produkt CPP zur Fahrzeugsteuerung der zumindest teilautomatisierten, motorisierten Fahrzeuge FZ_{übl}, FZ₁₅, FZₖₖ, FZ₇, FZ₁₈, FZ₂₂, FZ₃₀ in dem Gefahren-/Kreuzungsbereich FGB, KZ auf. Das Computer-Programm-Produkt CPP enthält einen nicht-flüchtigen, lesbaren Speicher SP, in dem prozessorlesbare Steuerprogrammbefehle eines die Fahrzeugsteuerung durchführenden Programm-Moduls PGM gespeichert sind, und einen mit dem Speicher SP verbundenen Prozessor PZ, der die Steuerprogrammbefehle des Programm-Moduls PGM zur Fahrzeugsteuerung ausführt und mit der Steuerschnittstelle STSS verbunden ist.

Mit der Abgabe der Fahrzeugverfügungsgewalten durch die Fahrzeuge FZ_{übl}, FZ₁₅, FZₖₖ, FZ₇, FZ₁₈, FZ₂₂, FZ₃₀ gelangen die dazu korrespondierenden, von den Fahrzeugen FZ_{übl}, FZ₁₅, FZₖₖ, FZ₇, FZ₁₈, FZ₂₂, FZ₃₀ generierten und der Steuereinrichtung STER übermittelten ersten Steuerungsdaten STGD₁ über die Kommunikationseinrichtung KOER und die Steuerschnittstelle STSS in den Prozessor PZ. Der Prozessor PZ erzeugt daraufhin mit dem Erhalt der ersten Steuerungsdaten STGD₁ und der Abgabe der Fahrzeugverfügungsgewalten durch die Fahrzeuge FZ_{übl}, FZ₁₅, FZₖₖ, FZ₇, FZ₁₈, FZ₂₂, FZ₃₀ den digitalen Fahrbahn-Gefahrenbereich-Zwilling FGBZ, mittels dem infolge der abgegebenen Fahrzeugverfügungsgewalten erste Fahrzeugbewegungen des überlangen Fahrzeugs FZ_{übl}, FZ₁₅ in vorausschauender Koordination mit zweiten Fahrbahnbewegungen der kollisionskritischen Fahrzeuge FZₖₖ, FZ₇, FZ₁₈, FZ₂₂, FZ₃₀, deren Fahrbahnbewegungen sich unkoordiniert mit den ersten Fahrzeugbewegungen in dem Fahrbahn-Gefahrenbereich FGB bzw. der "Doppel-T"-Kreuzung KZ kreuzen würden, zum Passieren des Fahrbahn-Gefahrenbereichs FGB bzw. der "Doppel-T"-Kreuzung KZ automatisch, dynamisch, fahrzeugkoordiniert und -kollisionsfrei gesteuert werden.

Zu diesem Zweck generiert der Prozessor PZ auf der Basis des erzeugten digitalen Fahrbahn-Gefahrenbereich-Zwilling FGBZ zweite Steuerungsdaten STGD₂, die über die Steuerschnittstelle STSS in die Kommunikationseinrichtung KOER bzw. die Funkkommunikationseinrichtung KOER gelangen und von dort gemäß der Darstellung in der FIGUR 2 über die Fahrzeug-Kommunikationsschnittstelle bzw. Fahrzeug-Funkkommunikationsschnittstelle FZKS letztendlich in das überlange Fahrzeug FZ_{übl}, FZ₁₅ gelangen, womit diese zum Passieren des Fahrbahn-Gefahrenbereichs FGB bzw. der "Doppel-T"-Kreuzung KZ gesteuert werden.

Für die Erzeugung des digitalen Fahrbahn-Gefahrenbereich-Zwillings FGBZ zur Fahrzeugsteuerung werden von dem Prozessor PZ bei der Ausführung des Programm-Modul PGM von jedem Fahrzeug FZ_{übl}, FZ₁₅, FZₖₖ, FZ₇, FZ₁₈, FZ₂₂, FZ₃₀ infolge der von den Fahrzeugen FZ_{übl}, FZ₁₅, FZₖₖ, FZ₇, FZ₁₈, FZ₂₂, FZ₃₀ abgegebenen Fahrzeugverfügungsgewalten und unter Nutzung des Kommunikationspfads zwischen diesen Fahrzeugen und der Steuereinrichtung STER bzw. dem Computer-Programm-Produkt CPP Fahrzeugtrajektorie und Fahrzeuggeschwindigkeit ermittelt.

Mit Hilfe des erzeugten, digitalen Fahrbahn-Gefahrenbereich-Zwillings FGBZ zur Fahrzeugsteuerung wird von dem Prozessor PZ bei der Ausführung des Programm-Modul PGM ermittelt, wann das überlange Fahrzeug FZ_{übl}, FZ₁₅ den Fahrbahn-Gefahrenbereich FGB bzw. die "Doppel-T"-Kreuzung KZ passiert hat. Diesem Fahrzeug wird die abgegebene Fahrzeugverfügungsgewalt durch von dem Prozessor PZ erzeugte, über den bestehenden Kommunikationspfad zwischen diesem Fahrzeug und der Steuereinrichtung STER bzw. dem Computer-Programm-Produkt CPP übertragene, dritte Steuerungsdaten STGD₃ zurückgegeben. Das Übertragen der dritte Steuerungsdaten STGD₃ passiert dabei bevorzugt im Zuge eines weiteren Handshake-Protokolls zwischen der Steuereinrichtung STER via der Kommunikationseinrichtung KOER und dem betroffenen Fahrzeug FZ_{übl}, FZ₁₅.

Wie nun mit Hilfe des erzeugten, digitalen Fahrbahn-Gefahrenbereich-Zwillings FGBZ zur Fahrzeugsteuerung zunächst - die erste Fahrzeugbewegungen des überlangen Fahrzeugs FZ_{übl}, FZ₁₅ in vorausschauender Koordination mit den zweiten Fahrbahnbewegungen der kollisionskritischen Fahrzeuge FZₖₖ, FZ₇, FZ₁₈, FZ₂₂, FZ₃₀, deren Fahrbahnbewegungen sich unkoordiniert mit den ersten Fahrzeugbewegungen in dem Fahrbahn-Gefahrenbereich FGB bzw. der "Doppel-T"-Kreuzung KZ kreuzen würden, zum Passieren des Fahrbahn-Gefahrenbereich FGB bzw. der "Doppel-T"-Kreuzung KZ automatisch, dynamisch, fahrzeugkoordiniert und -kollisionsfrei gesteuert werden und dann
- im Weiteren erkannt und ermittelt wird, wann das Fahrzeug den Fahrbahn-Gefahrenbereich FGB bzw. die "Doppel-T"-Kreuzung KZ passiert hat,
wird im Folgenden anhand von FIGUR 5, wo eine Verkehrssituation mit einer durch zumindest teilautomatisierte, motorisierte Fahrzeuge, die anteilig eine Fahrzeugüberlänge aufweisen, vollständig befahrenen und belegten "Doppel-T"-Kreuzung dargestellt ist, auf der Grundlage von FIGUR 4, wo eine Verkehrssituation mit einer durch zumindest teilautomatisierte, motorisierte Fahrzeuge ohne Fahrzeugüberlänge vollständig befahrenen und belegten "Doppel-T"-Kreuzung dargestellt ist, erläutert.

FIGUR 4 zeigt eine durch den Fahrbahn-Gefahrenbereich-Zwilling FGBZ, bei dessen Erzeugung in der Steuereinrichtung STER bzw. dem Computer-Programm-Produkt CPP, geschaffene erste Digitale Repräsentation DRP1 einer ersten Verkehrssituation mit einem durch zumindest teilautomatisierte, motorisierte Fahrzeuge ohne Fahrzeugüberlänge vollständig befahrenen und belegten Fahrbahn-Gefahrenbereich in Gestalt einer "DoppelT"-Kreuzung.

Die erste Verkehrssituation hat dabei nichts mit der Verkehrssituation in dem in der FIGUR 2 dargestellten Gefahren-/Kreuzungsbereich FGB, KZ zu tun. Mit der in der FIGUR 4 dargestellten ersten Digitalen Repräsentation DPR1 soll vielmehr ganz allgemein erläutert werden, wie Fahrzeugbewegungen der zumindest teilautomatisierten, motorisierten Fahrzeuge, die die "Doppel-T"-Kreuzung vollständig befahren und belegen, zum Passieren dieser automatisch, dynamisch, fahrzeugkoordiniert und -kollisionsfrei gesteuert werden.

Die erste Digitale Repräsentation DRP1 ist ein Rasterformat RF mit schachbrettartig abwechselnden Formatfeldern FF1, FF2, bei der
- ein Kernbereich KB des Rasterformats RF die "Doppel-T"-Kreuzung repräsentiert,
- erste Formatfelder FF1 des Rasterformats RF formatfeldwechselabhängig entweder
   "WEST->OST- und/oder OST->WEST"-Fahrzeugbewegungsrichtungen oder
   "NORD->SÜD- und/oder SÜD->NORD"-Fahrzeugbewegungsrichtungen mit jeweils höchstens einem Fahrzeug pro erstem Formatfeld FF1 repräsentieren und
- zweite Formatfelder FF2 des Rasterformats RF formatfeldwechselabhängig entweder
   "NORD->SÜD- und/oder SÜD->NORD"-Fahrzeugbewegungsrichtungen oder
   "WEST->OST- und/oder OST->WEST"-Fahrzeugbewegungsrichtungen mit jeweils höchstens einem Fahrzeug pro zweitem Formatfeld FF2 repräsentieren.

In dem Rasterformat RF mit den schachbrettartig abwechselnden Formatfeldern FF1, FF2 werden Fahrzeugfahrtinformationen zur ersten Verkehrssituation, aus und in welche Fahrtrichtungen sich die Fahrzeuge zum Passieren der "Doppel-T"-Kreuzung auf diese zubewegen digital repräsentiert.

Gemäß der in der FIGUR 4 dargestellten ersten Verkehrssituation bewegen sich 30 Fahrzeuge, dargestellt durch weiße Kreise in den ersten Formatfeldern FF1, digital und unidirektional in OST->WEST-Richtung und 22 Fahrzeuge, dargestellt durch schwarze Kreise in den zweiten Formatfeldern FF2, digital und unidirektional in NORD->SÜD-Richtung und das einheitlich in dem gesamten Rasterformat RF, wobei die Doppelpfeile an den weißen Kreisen und die Pfeile an den schwarzen Kreisen immer die jeweilige Bewegungsrichtung angeben.

Die Formatfelder FF1, FF2 des Rasterformats RF der ersten Digitalen Repräsentation DRP1 sind so gewählt, dass Fahrzeuge mit normaler, üblicher und definierter Fahrzeuglänge im Ruhe- und Bewegungszustand ohne sich gegenseitige zu berühren in den Feldern digital repräsentiert werden.

Welche Auswirkungen es hat, wenn sich z.B. in OST->WEST-Richtung ein Fahrzeug mit Fahrzeugüberlänge bewegt, das diese normale, übliche und definierte Fahrzeuglänge überschreitet, also größer ist, ist Gegenstand einer zweiten Verkehrssituation gemäß FIGUR 5.

Bezogen auf den "Doppel-T"-Kreuzungsverkehr in der FIGUR 2 bedeutet dies, dass die 52 Fahrzeuge, 30 in OST->WEST-Richtung und 22 in NORD->SÜD-Richtung, alle geradeaus fahren und nicht abbiegen und die Fahrbahn und Fahrtrichtung wechseln, so z.B. aus der NORD->SÜD-Richtung kommend in die OST->WEST-Richtung wechseln, also links abbiegen.

Das Abbiegen von Fahrzeugen sind Sonderfälle bezüglich der besagten Fahrzeugsteuerung im Gefahren-/Kreuzungsbereich, die in der Parallel-Patentanmeldung (Anmeldung-Nr......) mit der Bezeichnung "Verfahren, Computer-Programm-Produkt, Zentrale Steuerungseinheit und Steuerungssystem zum Steuern zumindest teilautomatisierter Fahrzeuge, anteilig mit Fahrbahnwechselabsichten, in einem Fahrbahn-Gefahrenbereich, insbesondere Kreuzungen von Fahrbahnen im Straßenverkehr", behandelt werden.

Die erste Verkehrssituation gemäß der FIGUR 4, übertragen auf den "Doppel-T"-Kreuzungsverkehr in der FIGUR 2, bedeutet, dass zwei Fahrbahnrichtungen mit jeweils 6 parallelen Fahrspuren, Fahrbahn mit 6 parallelen Fahrspuren in OST->WEST-Richtung und Fahrbahn mit 6 parallelen Fahrspuren in NORD->SÜD-Richtung, sich kreuzen und im Kreuzungsbereich, entspricht dem Kenbereich KB des Rasterformats RF (Schachbrett mit 36 Feldern), jeweils 18 Fahrzeuge in OST->WEST-Richtung und NORD->SÜD-Richtung unterwegs sind.

Zur Fahrzeugsteuerung in dem "Doppel-T"-Kreuzungsverkehr wird jede Fahrzeugbewegung der 36 Fahrzeuge zum Passieren der "Doppel-T"-Kreuzung automatisch, dynamisch, fahrzeugkoordiniert und -kollisionsfrei gesteuert, indem dazu korrespondierend
jedes Fahrzeug der 36 Fahrzeuge in dem Kernbereich KB des Rasterformats RF gemäß einer Digitalbewegung mit einem START-Punkt und einem ZIEL-Punkt in dem Rasterformat RF, die auf einem Formatfeldwechsel beruht, entweder
von einem ersten Formatfeld der ersten Formatfelder FF1 als den START-Punkt der Digitalbewegung auf ein benachbartes zweites Formatfeld der zweiten Formatfelder FF2 als den ZIEL-Punkt der Digitalbewegung, das kein Fahrzeug der 36 Fahrzeuge repräsentiert - also digital frei für die Digitalbewegung ist, oder
von einem zweiten Formatfeld der zweiten Formatfelder FF2 als den START-Punkt der Digitalbewegung auf ein benachbartes erstes Formatfeld der ersten Formatfelder FF1 als den ZIEL-Punkt der Digitalbewegung, das kein Fahrzeug der 36 Fahrzeuge repräsentiert - also digital frei für die Digitalbewegung ist, digital bewegt wird.

Es findet also in Bezug auf die 36 Fahrzeuge eine endliche Kettenreaktion von aufeinanderfolgenden Digitalbewegungen statt, die ihren Beginn, z.B. auf der Basis der FIGUR 4, mit einer ersten Digitalbewegung von einem Formatfeld FF1ₓ der ersten Formatfelder FF1, das ein Fahrzeug FZₓ repräsentiert, als START-Punkt zu einem Formatfeld FF2_{y} der zweiten Formatfelder FF2 als ZIEL-Punkt, das kein Fahrzeug repräsentiert, also digital frei ist, hat und die ihr Ende dann hat, wenn alle 36 Fahrzeuge, die zu Beginn im Kernbereich KB des Rasterformats RF waren, den Kenbereich KB des Rasterformats RF verlassen haben.

In diesem Zustand, wenn mit einer letzten Digitalbewegung in dem Rasterformat RF die 36 Fahrzeuge digital den Kernbereich KB des Rasterformats RF verlassen haben und damit die "Doppel-T"-Kreuzung passiert haben, wird jedem Fahrzeug die Fahrzeugverfügungsgewalt zurückgegeben, indem gemäß der FIGUR 3 die Steuereinrichtung STER bzw. das Computer-Programm-Produkt CPP die dritten Steuerungsdaten STGD₃ über den beschriebenen Kommunikationspfad an das jeweilige Fahrzeug überträgt.

Dies kann gemäß der Beschreibung zur FIGUR 3 auf einfache und in vorteilhafter Weise mit Hilfe desweiteren Handshake-Protokolls erreicht werden.

FIGUR 5 zeigt eine durch den Fahrbahn-Gefahrenbereich-Zwilling FGBZ, bei dessen Erzeugung in der Steuereinrichtung STER bzw. dem Computer-Programm-Produkt CPP nach FIGUR 3, geschaffene zweite Digitale Repräsentation DRP2 einer zweiten Verkehrssituation mit einem durch zumindest teilautomatisierte, motorisierte Fahrzeuge, die anteilig eine Fahrzeugüberlänge aufweisen, vollständig befahrenen und belegten Fahrbahn-Gefahrenbereich in Gestalt einer "Doppel-T"-Kreuzung.

Auch die zweite Verkehrssituation hat nichts mit der Verkehrssituation in dem in der FIGUR 2 dargestellten Gefahren-/Kreuzungsbereich FGB, KZ zu tun. Mit der in der FIGUR 5 dargestellten zweiten Digitalen Repräsentation DPR2 soll nun auf der Basis der vorstehenden Ausführungen zur Steuerung der Fahrzeugbewegungen in der FIGUR 4 nun erläutert werden wie erste Fahrzeugbewegungen eines überlangen Fahrzeugs in vorausschauender Koordination mit zweiten Fahrbahnbewegungen von kollisionskritischen Fahrzeuge, deren Fahrbahnbewegungen sich unkoordiniert mit den ersten Fahrzeugbewegungen in der "Doppel-T"-Kreuzung kreuzen würden, zum Passieren der "Doppel-T"-Kreuzung automatisch, dynamisch, fahrzeugkoordiniert und -kollisionsfrei gesteuert werden.

Die zweite Digitale Repräsentation DRP2 weist auch wieder das Rasterformat RF mit den schachbrettartig abwechselnden Formatfeldern FF1, FF2, bei der
- der Kernbereich KB des Rasterformats RF die "Doppel-T"-Kreuzung repräsentiert,
- die ersten Formatfelder FF1 des Rasterformats RF formatfeldwechselabhängig entweder
   die "WEST->OST- und/oder OST->WEST"-Fahrzeugbewegungsrichtungen oder
   die "NORD->SÜD- und/oder SÜD->NORD"-Fahrzeugbewegungsrichtungen mit jeweils wieder höchstens einem Fahrzeug pro erstem Formatfeld FF1 repräsentieren und
- die zweiten Formatfelder FF2 des Rasterformats RF formatfeldwechselabhängig entweder
   die "NORD->SÜD- und/oder SÜD->NORD"-Fahrzeugbewegungsrichtungen oder
   die "WEST->OST- und/oder OST->WEST"-Fahrzeugbewegungsrichtungen mit jeweils wieder höchstens einem Fahrzeug pro zweitem Formatfeld FF2 repräsentieren.

In dem Rasterformat RF mit den schachbrettartig abwechselnden Formatfeldern FF1, FF2 werden Fahrzeugfahrtinformationen zur zweiten Verkehrssituation, aus und in welche Fahrtrichtungen sich die Fahrzeuge zum Passieren der "Doppel-T"-Kreuzung auf diese zubewegen digital repräsentiert.

Gemäß der in der FIGUR 5 dargestellten zweiten Verkehrssituation bewegen sich jetzt 28 Fahrzeuge statt 30 Fahrzeuge wie in der FIGUR 4, dargestellt durch weiße Kreise in den ersten Formatfeldern FF1, digital und unidirektional in OST->WEST-Richtung und 21 Fahrzeuge statt 22 Fahrzeuge wie in der FIGUR 4, dargestellt durch schwarze Kreise in den zweiten Formatfeldern FF2, digital und unidirektional in NORD->SÜD-Richtung und das einheitlich in dem gesamten Rasterformat RF, wobei die Doppelpfeile an den weißen Kreisen und die Pfeile an den schwarzen Kreisen immer die jeweilige Bewegungsrichtung angeben.

Ein weiterer Unterschied zu der FIGUR 4 besteht darin, dass zu den 21 Fahrzeugen in OST->WEST-Richtung noch zusätzlich ein überlanges Fahrzeug FZ_{übl} in der OST<->WEST-Richtung unterwegs ist und sich mit einem Teil der Fahrzeuglänge bereits in dem Kernbereich KB befindet. In einer ersten Ausführungsvariante (gestricheltes Rechteck in der FIGUR 5) erstreckt das überlange Fahrzeug FZ_{übl} über zwei Formatfelder FF, in einer zweiten Ausführungsvariante (gepunktetes Rechteck in der FIGUR 5) über drei Formatfelder FF und in einer dritten Ausführungsvariante (strich-punktiertes Rechteck in der FIGUR 5) über vier Formatfelder FF.

Die zweite Verkehrssituation in der FIGUR 5 ist auch wieder durch zwei Fahrbahnrichtungen mit jeweils 6 parallelen Fahrspuren, Fahrbahn mit 6 parallelen Fahrspuren in OST->WEST-Richtung und Fahrbahn mit 6 parallelen Fahrspuren in NORD->SÜD-Richtung gekennzeichnet, die sich kreuzen, und bei der im Kreuzungsbereich - entspricht dem Kernbereich KB des Rasterformats RF (Schachbrett mit 36 Feldern) - 18 Fahrzeuge in OST->WEST-Richtung, wovon eins davon das überlange Fahrzeug FZ_{übl} ist, und 18 Fahrzeuge in NORD->SÜD-Richtung unterwegs sind.

Wie in dieser zweiten Verkehrssituation der Fahrbahnwechsel des zumindest teilautomatisierten, motorisierten Fahrzeug FZ_{übl} gemäß den Ausführungsvarianten durch den Fahrbahn-Gefahrenbereich-Zwilling FGBZ, bei dessen Erzeugung in der Steuereinrichtung STER bzw. dem Computer-Programm-Produkt CPP nach FIGUR 3, gesteuert wird, soll nachfolgend erläutert werden.

Jede erste Fahrzeugbewegung des überlangen Fahrzeugs FZ_{übl} wird in der vorausschauender Koordination mit den zweiten Fahrbahnbewegungen der kollisionskritischen Fahrzeuge FZₖₖ der anderen Fahrzeuge in dem Kernbereich KB der von dem Fahrbahn-Gefahrenbereich-Zwilling FGBZ geschaffenen zweiten Digitalen Repräsentation DRP2 automatisch, dynamisch, fahrzeugkoordiniert und -kollisionsfrei gesteuert.

Korrespondierend dazu wird das überlange Fahrzeug FZ_{übl} wie jedes andere Fahrzeug der Fahrzeuge in dem Kernbereich KB des Rasterformats RF gemäß einer Digitalbewegung mit einem START-Punkt und einem ZIEL-Punkt in dem Rasterformat RF, die auf einem Formatfeldwechsel beruht, entweder
von einem ersten Formatfeld der ersten Formatfelder FF1 als den START-Punkt der Digitalbewegung auf ein benachbartes zweites Formatfeld der zweiten Formatfelder FF2 als den ZIEL-Punkt der Digitalbewegung, das kein Fahrzeug der Fahrzeuge repräsentiert - also digital frei für die Digitalbewegung ist, oder
von einem zweiten Formatfeld der zweiten Formatfelder FF2 als den START-Punkt der Digitalbewegung auf ein benachbartes erstes Formatfeld der ersten Formatfelder FF1 als den ZIEL-Punkt der Digitalbewegung, das kein Fahrzeug der Fahrzeuge repräsentiert - also digital frei für die Digitalbewegung ist, digital bewegt.

Zusätzlich dazu werden
- für die Digitalbewegungen in dem Kernbereich KB des Rasterformats RF in einer Bewegungsrichtung des überlangen Fahrzeugs FZ_{übl} eine durch die Fahrzeuglänge des überlangen Fahrzeugs FZ_{übl} vorgegebene Anzahl von Formatfeldern FF1, FF2 digital freigemacht oder digital freigehalten wird,
- die Formatfelder FF1, FF2 in dem Kernbereich KB des Rasterformats RF für die Digitalbewegungen in Bewegungsrichtungen der kollisionskritischen Fahrzeuge FZₖₖ, die aufgrund der Fahrzeuglänge des überlangen Fahrzeugs FZ_{übl} zu Kollisionen zwischen dem überlangen Fahrzeugs FZ_{übl} und den kollisionskritischen Fahrzeugen FZₖₖ führen würden, digital freigemacht oder digital freigehalten werden.

Diese kollisionskritischen Fahrzeuge FZₖₖ befinden sich potentiell für die erste Ausführungsvariante des überlangen Fahrzeugs FZ_{übl}, wenn von diesem 2 Formatfelder FF belegt werden, in einem Kollisionskorridor KK_{2FF} und für die dritte Ausführungsvariante des überlangen Fahrzeugs FZ_{übl}, wenn von diesem 4 Formatfelder FF belegt werden, in einem Kollisionskorridor KK_{4FF}. Für die zweite Ausführungsvariante des überlangen Fahrzeugs FZ_{übl}, wenn von diesem 3 Formatfelder FF belegt werden, gibt es keine kollisionskritischen Fahrzeuge FZₖₖ. Das bedeutet ganz allgemein, wenn des überlange Fahrzeugs FZ_{übl}, 3, 5, 7, etc. Formatfelder FF belegt, es keine kollisionskritischen Fahrzeuge FZₖₖ gibt, wohingegen, wenn des überlange Fahrzeugs FZ_{übl}, 2, 4, 6, etc. Formatfelder FF belegt, esa kollisionskritische Fahrzeuge FZₖₖ geben wird.

Das digitale Freimachen oder digitale Freihalten der Formatfelder bleibt selbstverständlich nicht auf der digitalen Ebene beschränkt, sondern korrespondierend dazu werden durch entsprechende Fahrzeugsteuerung infolge das Abgebens der Fahrzeugverfügungsgewalten auch die Stellen in dem Fahrbahn-Gefahrenbereich vom realen, tatsächlichen Fahrzeugverkehr entsprechend freigemacht oder freigehalten.

Es findet also in Bezug auf die 36 Fahrzeuge in dem Kernbereich KB, unabhängig von der betrachteten Fahrzeugüberlänge in der FIGUR 5 im Unterschied zu der FIGUR 4, wieder die endliche Kettenreaktion von aufeinanderfolgenden Digitalbewegungen statt, die ihren Beginn mit der ersten Digitalbewegung von dem Formatfeld FF1ₓ der ersten Formatfelder FF1, das das Fahrzeug FZₓ repräsentiert, als START-Punkt zu dem Formatfeld FF2_{y} der zweiten Formatfelder FF2 als ZIEL-Punkt, das kein Fahrzeug repräsentiert, also digital frei ist, hat und die ihr Ende dann hat, wenn alle 36 Fahrzeuge, die zu Beginn im Kernbereich KB des Rasterformats RF waren, den Kenbereich KB des Rasterformats RF verlassen haben.

In diesem Zustand, wenn mit einer letzten Digitalbewegung in dem Rasterformat RF das überlange Fahrzeugs FZ_{übl} digital den Kernbereich KB des Rasterformats RF verlassen hat und damit die "Doppel-T"-Kreuzung passiert hat, wird dem überlangen Fahrzeug FZ_{übl} die Fahrzeugverfügungsgewalt zurückgegeben, indem gemäß der FIGUR 3 die Steuereinrichtung STER bzw. das Computer-Programm-Produkt CPP die dritten Steuerungsdaten STGD₃ über den beschriebenen Kommunikationspfad an das Fahrzeug überträgt.

Dies kann gemäß der Beschreibung zur FIGUR 3 auf einfache und in vorteilhafter Weise mit Hilfe desweiteren Handshake-Protokolls erreicht werden.

## Patentansprüche

1. Verfahren zum Steuern zumindest teilautomatisierter Fahrzeuge (FZ₁...FZₙ), anteilig mit Fahrzeugüberlängen, in einem Fahrbahn-Gefahrenbereich (FGB), insbesondere Kreuzungen (KZ, KZ') von Fahrbahnen im Straßenverkehr,
**dadurch gekennzeichnet, dass**
**a)** mindestens ein in Bezug auf Fahrzeuglänge überlanges Fahrzeug (FZ_{übl}, FZ₁₅) und jedes andere Fahrzeug der Fahrzeuge (FZ₁...FZₙ) beim Sich-Nähern des Fahrbahn-Gefahrenbereichs (FGB, KZ, KZ') zum Passieren desjenigen eine Fahrzeugverfügungsgewalt zur Fahrzeugsteuerung von dynamischen Fahraufgaben abgeben,
**b)** mit der Abgabe der Fahrzeugverfügungsgewalten durch die Fahrzeuge (FZ_{übl}, FZ₁...FZₙ) von einer zentralen Steuerungsinstanz (STGE, STER, CPP, PZ, SP, PGM) ein digitaler Fahrbahn-Gefahrenbereich-Zwilling (FGBZ) erzeugt wird, mittels dem infolge der abgegebenen Fahrzeugverfügungsgewalten erste Fahrzeugbewegungen des überlangen Fahrzeugs (FZ_{übl}, FZ₁₅) in vorausschauender Koordination mit zweiten Fahrbahnbewegungen kollisionskritischer Fahrzeuge (FZₖₖ, FZ₇, FZ₁₈, FZ₂₂, FZ₃₀) der anderen Fahrzeuge, deren Fahrbahnbewegungen sich unkoordiniert mit den ersten Fahrzeugbewegungen im Fahrbahn-Gefahrenbereich (FGB, KZ, KZ') kreuzen würden, zum Passieren des Fahrbahn-Gefahrenbereichs (FGB, KZ, KZ') automatisch, dynamisch, fahrzeugkoordiniert und -kollisionsfrei gesteuert werden.

2. Verfahren nach Anspruch 1, **dadurch gekennzeichnet, dass**
im Vorfeld des Sich-Näherns des Fahrbahn-Gefahrenbereichs (FGB, KZ, KZ') das Abgeben der Fahrzeugverfügungsgewalt mittels eines Handshake-Protokolls zwischen jedem Fahrzeug der Fahrzeuge (FZ_{übl}, FZₖₖ, FZ₁...FZₙ) und der zentralen Steuerungsinstanz (STGE, STER, CPP, PZ, SP, PGM) vereinbart wird.

3. Verfahren nach Anspruch 1 oder 2, **dadurch gekennzeichnet, dass**
für die Erzeugung des digitalen Fahrbahn-Gefahrenbereich-Zwillings (FGBZ) zur Fahrzeugsteuerung infolge der abgegebenen Fahrzeugverfügungsgewalten von jedem Fahrzeug der Fahrzeuge (FZ_{übl}, FZₖₖ, FZ₁...FZₙ) Fahrzeugtrajektorie und Fahrzeuggeschwindigkeit ermittelt werden.

4. Verfahren nach einem der Ansprüche 1 bis 3, **dadurch gekennzeichnet, dass**
**a)** mit der Erzeugung des digitalen Fahrbahn-Gefahrenbereich-Zwillings (FGBZ) Fahrzeugfahrtinformationen, aus und in welche Fahrtrichtungen sich die Fahrzeuge (FZ_{übl}, FZₖₖ, FZ₁...FZₙ) zum Passieren des Fahrbahn-Gefahrenbereichs (FGB, KZ, KZ') auf diesen zubewegen, in einem Rasterformat (RF) mit schachbrettartig abwechselnden Formatfeldern (FF1, FF2) digital repräsentiert werden, wobei
**a1**) ein Kernbereich (KB) des Rasterformats (RF) den Fahrbahn-Gefahrenbereich (FGB, KZ, KZ') repräsentiert,
**a2)** erste Formatfelder (FF1) des Rasterformats (RF) formatfeldwechselabhängig entweder "WEST->OST- und/oder OST->WEST"-Fahrzeugbewegungsrichtungen oder "NORD->SÜD- und/oder SÜD->NORD"-Fahrzeugbewegungsrichtungen mit jeweils höchstens einem Fahrzeug pro erstem Formatfeld (FF1) repräsentieren und
**a3)** zweite Formatfelder (FF2) des Rasterformats (RF) formatfeldwechselabhängig entweder "NORD->SÜD- und/oder SÜD->NORD"-Fahrzeugbewegungsrichtungen oder "WEST->OST- und/oder OST->WEST"-Fahrzeugbewegungsrichtungen mit jeweils höchstens einem Fahrzeug pro zweitem Formatfeld (FF2) repräsentieren; und
**b)** jede erste Fahrzeugbewegung des überlangen Fahrzeugs (FZ_{übl}, FZ₁₅) in der vorausschauender Koordination mit den zweiten Fahrbahnbewegungen der kollisionskritischen Fahrzeuge (FZₖₖ, FZ₇, FZ₁₈, FZ₂₂, FZ₃₀) der anderen Fahrzeuge zum Passieren des Fahrbahn-Gefahrenbereichs (FGB, KZ, KZ') automatisch, dynamisch, fahrzeugkoordiniert und -kollisionsfrei gesteuert wird, indem dazu korrespondierend
**bl)** das überlange Fahrzeug (FZ_{übl}, FZ₁₅) wie jedes andere Fahrzeug der Fahrzeuge (FZ₁...FZₙ) im Kernbereich (KB) des Rasterformats (RF) gemäß einer Digitalbewegung mit einem START-Punkt und einem ZIEL-Punkt in dem Rasterformat (RF), die auf einem Formatfeldwechsel beruht, entweder
von einem ersten Formatfeld der ersten Formatfelder (FF1) als den START-Punkt der Digitalbewegung auf ein benachbartes zweites Formatfeld der zweiten Formatfelder (FF2) als den ZIEL-Punkt der Digitalbewegung, das kein Fahrzeug der Fahrzeuge (FZ₁...FZₙ) repräsentiert - also digital frei für die Digitalbewegung ist, oder
von einem zweiten Formatfeld der zweiten Formatfelder (FF2) als den START-Punkt der Digitalbewegung auf ein benachbartes erstes Formatfeld der ersten Formatfelder (FF1) als den ZIEL-Punkt der Digitalbewegung, das kein Fahrzeug der Fahrzeuge (FZ₁...FZₙ) repräsentiert - also digital frei für die Digitalbewegung ist,
digital bewegt wird,
**b2)** für die Digitalbewegungen in dem Kernbereich (KB) des Rasterformats (RF) in einer Bewegungsrichtung des überlangen Fahrzeugs (FZ_{übl}, FZ₁₅) eine durch die Fahrzeuglänge des überlangen Fahrzeugs (FZ_{übl}, FZ₁₅) vorgegebene Anzahl von Formatfeldern (FF1, FF2) digital freigemacht oder digital freigehalten wird,
**b3)** die Formatfelder (FF2, FF1) in dem Kernbereich (KB) des Rasterformats (RF) für die Digitalbewegungen in Bewegungsrichtungen der kollisionskritischen Fahrzeuge (FZₖₖ, FZ₇, FZ₁₈, FZ₂₂, FZ₃₀), die aufgrund der Fahrzeuglänge des überlangen Fahrzeugs (FZ_{übl}, FZ₁₅) zu Kollisionen zwischen dem überlangen Fahrzeugs (FZ_{übl}, FZ₁₅) und den kollisionskritischen Fahrzeugen (FZₖₖ, FZ₇, FZ₁₈, FZ₂₂, FZ₃₀) führen würden, digital freigemacht oder digital freigehalten werden.

5. Verfahren nach Anspruch 4, **dadurch gekennzeichnet, dass**
die Fahrzeugverfügungsgewalt dem überlangen Fahrzeug (FZ_{übl}, FZ₁₅) von der zentralen Steuerungsinstanz (STGE, STER, CPP, PZ, SP, PGM), insbesondere mittels eines weiteren Handshake-Protokolls, zurückgegeben wird, wenn mit einer letzten Digitalbewegung in dem Rasterformat (RF) das überlange Fahrzeug (FZ_{übl}, FZ₁₅) digital den Kernbereich (KB) des Rasterformats (RF) verlässt und es damit den Fahrbahn-Gefahrenbereich (FGB, KZ, KZ') passiert hat.

6. Computer-Programm-Produkt (CPP) zum Steuern zumindest teilautomatisierter Fahrzeuge (FZ₁...FZₙ), anteilig mit Fahrzeugüberlängen, in einem Fahrbahn-Gefahrenbereich, insbesondere Kreuzungen von Fahrbahnen im Straßenverkehr, mit einem nicht-flüchtigen, lesbaren Speicher (SP), in dem prozessorlesbare Steuerprogrammbefehle eines die Fahrzeugsteuerung durchführenden Programm-Moduls (PGM) gespeichert sind, und einem mit dem Speicher (SP) verbundenen Prozessor (PZ), der die Steuerprogrammbefehle des Programm-Moduls (PGM) zur Fahrzeugsteuerung ausführt,
**dadurch gekennzeichnet, dass**
der Prozessor (PZ)
**a)** erste Steuerungsdaten (STGD₁) erhält, mit denen mindestens ein in Bezug auf Fahrzeuglänge überlanges Fahrzeug (FZ_{übl}, FZ₁₅) und jedes andere Fahrzeug der Fahrzeuge (FZ₁...FZₙ) beim Sich-Nähern des Fahrbahn-Gefahrenbereichs (FGB, KZ, KZ') zum Passieren desjenigen eine Fahrzeugverfügungsgewalt zur Fahrzeugsteuerung von dynamischen Fahraufgaben abgeben,
**b)** mit dem Erhalt der ersten Steuerungsdaten (STGD₁) und der Abgabe der Fahrzeugverfügungsgewalten durch die Fahrzeuge (FZ_{übl}, FZ₁...FZₙ) einen digitalen Fahrbahn-Gefahrenbereich-Zwilling (FGBZ) erzeugt, mittels dem infolge der abgegebenen Fahrzeugverfügungsgewalten und durch zweite Steuerungsdaten (STGD₂) erste Fahrzeugbewegungen des überlangen Fahrzeugs (FZ_{übl}, FZ₁₅) in vorausschauender Koordination mit zweiten Fahrbahnbewegungen kollisionskritischer Fahrzeuge (FZₖₖ, FZ₇, FZ₁₈, FZ₂₂, FZ₃₀) der anderen Fahrzeuge, deren Fahrbahnbewegungen sich unkoordiniert mit den ersten Fahrzeugbewegungen im Fahrbahn-Gefahrenbereich (FGB, KZ, KZ') kreuzen würden, zum Passieren des Fahrbahn-Gefahrenbereichs (FGB, KZ, KZ') automatisch, dynamisch, fahrzeugkoordiniert und -kollisionsfrei steuerbar sind.

7. Computer-Programm-Produkt (CPP) nach Anspruch 6, **dadurch gekennzeichnet, dass**
der Prozessor (PZ) und das Programm-Modul (PGM) derart ausgebildet sind, dass für die Erzeugung des digitalen Fahrbahn-Gefahrenbereich-Zwillings (FGBZ) zur Fahrzeugsteuerung infolge der abgegebenen Fahrzeugverfügungsgewalten von jedem Fahrzeug der Fahrzeuge (FZ_{übl}, FZₖₖ, FZ₁...FZₙ) Fahrzeugtrajektorie und Fahrzeuggeschwindigkeit ermittelt werden.

8. Computer-Programm-Produkt (CPP) nach Anspruch 6 oder 7, **dadurch gekennzeichnet, dass**
der Prozessor (PZ) und das Programm-Modul (PGM) derart ausgebildet sind, dass
**a)** mit der Erzeugung des digitalen Fahrbahn-Gefahrenbereich-Zwillings (FGBZ) Fahrzeugfahrtinformationen, aus und in welche Fahrtrichtungen sich die Fahrzeuge (FZ_{übl}, FZₖₖ, FZ₁...FZₙ) zum Passieren des Fahrbahn-Gefahrenbereichs (FGB, KZ, KZ') auf diesen zubewegen, in einem Rasterformat (RF) mit schachbrettartig abwechselnden Formatfeldern (FF1, FF2) digital repräsentiert werden, wobei
**a1**) ein Kernbereich (KB) des Rasterformats (RF) den Fahrbahn-Gefahrenbereich (FGB, KZ, KZ') repräsentiert,
**a2)** erste Formatfelder (FF1) des Rasterformats (RF) formatfeldwechselabhängig entweder "WEST->OST- und/oder OST->WEST"-Fahrzeugbewegungsrichtungen oder
"NORD->SÜD- und/oder SÜD->NORD"-Fahrzeugbewegungsrichtungen mit jeweils höchstens einem Fahrzeug pro erstem Formatfeld (FF1) repräsentieren und
**a3)** zweite Formatfelder (FF2) des Rasterformats (RF) formatfeldwechselabhängig entweder
"NORD->SÜD- und/oder SÜD->NORD"-Fahrzeugbewegungsrichtungen oder
"WEST->OST- und/oder OST->WEST"-Fahrzeugbewegungsrichtungen mit jeweils höchstens einem Fahrzeug pro zweitem Formatfeld (FF2) repräsentieren; und
**b)** jede erste Fahrzeugbewegung des überlangen Fahrzeugs (FZ_{übl}, FZ₁₅) in der vorausschauender Koordination mit den zweiten Fahrbahnbewegungen der kollisionskritischen Fahrzeuge (FZₖₖ, FZ₇, FZ₁₈, FZ₂₂, FZ₃₀) der anderen Fahrzeuge zum Passieren des Fahrbahn-Gefahrenbereichs (FGB, KZ, KZ') automatisch, dynamisch, fahrzeugkoordiniert und -kollisionsfrei gesteuert wird, indem dazu korrespondierend
**b1)** das überlange Fahrzeug (FZ_{übl}, FZ₁₅) wie jedes andere Fahrzeug der Fahrzeuge (FZ₁...FZₙ) im Kernbereich (KB) des Rasterformats (RF) gemäß einer Digitalbewegung mit einem START-Punkt und einem ZIEL-Punkt in dem Rasterformat (RF), die auf einem Formatfeldwechsel beruht, entweder
von einem ersten Formatfeld der ersten Formatfelder (FF1) als den START-Punkt der Digitalbewegung auf ein benachbartes zweites Formatfeld der zweiten Formatfelder (FF2) als den ZIEL-Punkt der Digitalbewegung, das kein Fahrzeug der Fahrzeuge (FZ₁...FZₙ) repräsentiert - also digital frei für die Digitalbewegung ist, oder
von einem zweiten Formatfeld der zweiten Formatfelder (FF2) als den START-Punkt der Digitalbewegung auf ein benachbartes erstes Formatfeld der ersten Formatfelder (FF1) als den ZIEL-Punkt der Digitalbewegung, das kein Fahrzeug der Fahrzeuge (FZ₁...FZₙ) repräsentiert - also digital frei für die Digitalbewegung ist,
digital bewegt wird,
**b2)** für die Digitalbewegungen in dem Kernbereich (KB) des Rasterformats (RF) in einer Bewegungsrichtung des überlangen Fahrzeugs (FZ_{übl}, FZ₁₅) eine durch die Fahrzeuglänge des überlangen Fahrzeugs (FZ_{übl}, FZ₁₅) vorgegebene Anzahl von Formatfeldern (FF1, FF2) digital freigemacht oder digital freigehalten wird,
**b3)** die Formatfelder (FF2, FF1) in dem Kernbereich (KB) des Rasterformats (RF) für die Digitalbewegungen in Bewegungsrichtungen der kollisionskritischen Fahrzeuge (FZₖₖ, FZ₇, FZ₁₈, FZ₂₂, FZ₃₀), die aufgrund der Fahrzeuglänge des überlangen Fahrzeugs (FZ_{übl}, FZ₁₅) zu Kollisionen zwischen dem überlangen Fahrzeug (FZ_{übl}, FZ₁₅) und den kollisionskritischen Fahrzeugen (FZₖₖ, FZ₇, FZ₁₈, FZ₂₂, FZ₃₀) führen würden, digital freigemacht oder digital freigehalten werden.

9. Computer-Programm-Produkt (CPP) nach Anspruch 8, **dadurch gekennzeichnet, dass**
der Prozessor (PZ) und das Programm-Modul (PGM) derart ausgebildet sind, dass die Fahrzeugverfügungsgewalt dem überlangen Fahrzeug (FZ_{übl}, FZ₁₅) durch dritte Steuerungsdaten (STGD₃) zurückgegeben wird, wenn mit einer letzten Digitalbewegung in dem Rasterformat (RF) das überlange Fahrzeug (FZ_{übl}, FZ₁₅) digital den Kernbereich (KB) des Rasterformats (RF) verlässt und es damit den Fahrbahn-Gefahrenbereich (FGB, KZ, KZ') passiert hat.

10. Zentrale Steuerungseinheit (STGE) zum Steuern zumindest teilautomatisierter Fahrzeuge (FZ₁...FZₙ), anteilig mit Fahrzeugüberlängen, in einem Fahrbahn-Gefahrenbereich (FGB), insbesondere Kreuzungen (KZ, KZ') von Fahrbahnen im Straßenverkehr,
**gekennzeichnet durch**
- eine Steuereinrichtung (STER) mit einem Computer-Programm-Produkt (CPP), das einen nicht-flüchtigen, lesbaren Speicher (SP), in dem prozessorlesbare Steuerprogrammbefehle eines die Fahrzeugsteuerung durchführenden Programm-Moduls (PGM) gespeichert sind, und einem mit dem Speicher (SP) verbundenen Prozessor (PZ), der die Steuerprogrammbefehle des Programm-Moduls (PGM) zur Fahrzeugsteuerung ausführt, aufweist, und einer Steuerschnittstelle (STSS) und
- mindestens eine Kommunikationseinrichtung (KOER), die kommunikationstechnisch mit der Steuereinrichtung (STER) und darin mit dem Computer-Programm-Produkt (CPP) über die Steuerschnittstelle (STSS) verbunden oder der Steuereinrichtung (STER) und dem Computer-Programm-Produkt (CPP) darin zugeordnet ist, wobei die Steuereinrichtung (STER) und die Kommunikationseinrichtung (KOER) derart in Bezug auf die Fahrzeugsteuerung zusammenwirken und ausgebildet sind, dass
**a)** die Kommunikationseinrichtung (KOER) von mindestens einem in Bezug auf Fahrzeuglänge überlangen Fahrzeug (FZ_{übl}, FZ₁₅) und jedem anderen Fahrzeug der Fahrzeuge (FZ₁...FZₙ), wenn diese sich dem Fahrbahn-Gefahrenbereich (FGB, KZ, KZ') zum Passieren desjenigen nähern, erste Steuerungsdaten (STGD₁) zwecks Abgeben einer Fahrzeugverfügungsgewalt zur Fahrzeugsteuerung von dynamischen Fahraufgaben empfängt und an die die Steuereinrichtung (STER) weiterleitet,
**b)** die Steuereinrichtung (STER) mit dem Empfangen der ersten Steuerungsdaten (STGD₁) und der dadurch abgegebenen Fahrzeugverfügungsgewalten durch die Fahrzeuge (FZ₁...FZₙ) einen digitalen Fahrbahn-Gefahrenbereich-Zwilling (FGBZ) erzeugt, mittels dem infolge der abgegebenen Fahrzeugverfügungsgewalten die Steuereinrichtung (STER) durch zweite Steuerungsdaten (STGD₂) via der Kommunikationseinrichtung (KOER) erste Fahrzeugbewegungen des überlangen Fahrzeugs (FZ_{übl}, FZ₁₅) in vorausschauender Koordination mit zweiten Fahrbahnbewegungen kollisionskritischer Fahrzeuge (FZₖₖ, FZ₇, FZ₁₈, FZ₂₂, FZ₃₀) der anderen Fahrzeuge, deren Fahrbahnbewegungen sich unkoordiniert mit den ersten Fahrzeugbewegungen im Fahrbahn-Gefahrenbereich (FGB, KZ, KZ') kreuzen würden, zum Passieren des Fahrbahn-Gefahrenbereichs (FGB, KZ, KZ') automatisch, dynamisch, fahrzeugkoordiniert und -kollisionsfrei steuert.

11. Zentrale Steuerungseinheit (STGE) nach Anspruch 10, **dadurch gekennzeichnet, dass**
die Steuereinrichtung (STER) und die Kommunikationseinrichtung (KOER) derart zusammenwirken und ausgebildet sind, dass im Vorfeld, wenn sich das Fahrzeug der Fahrzeuge (FZ_{übl}, FZₖₖ, FZ₁...FZₙ) des Fahrbahn-Gefahrenbereichs (FGB, KZ, KZ') nähert, mittels eines Handshake-Protokolls zwischen jedem Fahrzeug der Fahrzeuge (FZ_{übl}, FZₖₖ, FZ₁...FZₙ) und der Steuereinrichtung (STER) via der Kommunikationseinrichtung (KOER) das Abgeben der Fahrzeugverfügungsgewalt und das Senden der Nachricht zum Abgeben der Fahrzeugverfügungsgewalt vereinbart wird.

12. Zentrale Steuerungseinheit (STGE) nach Anspruch 10 oder 11, **dadurch gekennzeichnet, dass**
die Steuereinrichtung (STER) und die Kommunikationseinrichtung (KOER) derart zusammenwirken und ausgebildet sind, dass die Steuereinrichtung (STER) für die Erzeugung des digitalen Fahrbahn-Gefahrenbereich-Zwillings (FGBZ) zur Fahrzeugsteuerung infolge der Fahrzeugverfügungsgewalten via der Kommunikationseinrichtung (KOER) von jedem Fahrzeug der Fahrzeuge (FZ_{übl}, FZₖₖ, FZ₁...FZₙ) Fahrzeugtrajektorie und Fahrzeuggeschwindigkeit ermittelt.

13. Zentrale Steuerungseinheit (STGE) nach einem der Ansprüche 10 bis 12, **dadurch gekennzeichnet, dass** die Steuereinrichtung (STER) und die Kommunikationseinrichtung (KOER) derart zusammenwirken und ausgebildet sind, dass die Steuereinrichtung (STER)
**a)** mit der Erzeugung des digitalen Fahrbahn-Gefahrenbereich-Zwillings (FGBZ) Fahrzeugfahrtinformationen, aus und in welche Fahrtrichtungen sich die Fahrzeuge (FZ_{übl}, FZₖₖ, FZ₁...FZₙ) zum Passieren des Fahrbahn-Gefahrenbereichs (FGB, KZ, KZ') auf diesen zubewegen, in einem Rasterformat (RF) mit schachbrettartig abwechselnden Formatfeldern (FF1, FF2) digital repräsentiert, wobei
**a1**) ein Kernbereich (KB) des Rasterformats (RF) den Fahrbahn-Gefahrenbereich (FGB, KZ, KZ') repräsentiert,
**a2)** erste Formatfelder (FF1) des Rasterformats (RF) formatfeldwechselabhängig entweder
"WEST->OST- und/oder OST->WEST"-Fahrzeugbewegungsrichtungen oder
"NORD->SÜD- und/oder SÜD->NORD"-Fahrzeugbewegungsrichtungen mit jeweils höchstens einem Fahrzeug pro erstem Formatfeld (FF1) repräsentieren und
**a3)** zweite Formatfelder (FF2) des Rasterformats (RF) formatfeldwechselabhängig entweder
"NORD->SÜD- und/oder SÜD->NORD"-Fahrzeugbewegungsrichtungen oder
"WEST->OST- und/oder OST->WEST"-Fahrzeugbewegungsrichtungen mit jeweils höchstens einem Fahrzeug pro zweitem Formatfeld (FF2) repräsentieren; und
**b)** jede erste Fahrzeugbewegung des überlangen Fahrzeugs (FZ_{übl}, FZ₁₅) in der vorausschauender Koordination mit den zweiten Fahrbahnbewegungen der kollisionskritischen Fahrzeuge (FZₖₖ, FZ₇, FZ₁₈, FZ₂₂, FZ₃₀) der anderen Fahrzeuge zum Passieren des Fahrbahn-Gefahrenbereichs (FGB, KZ, KZ') automatisch, dynamisch, fahrzeugkoordiniert und -kollisionsfrei steuert, indem dazu korrespondierend
**b1)** das überlange Fahrzeug (FZ_{übl}, FZ₁₅) wie jedes andere Fahrzeug der Fahrzeuge (FZ₁...FZₙ) im Kernbereich (KB) des Rasterformats (RF) gemäß einer Digitalbewegung mit einem START-Punkt und einem ZIEL-Punkt in dem Rasterformat (RF), die auf einem Formatfeldwechsel beruht, entweder
von einem ersten Formatfeld der ersten Formatfelder (FF1) als den START-Punkt der Digitalbewegung auf ein benachbartes zweites Formatfeld der zweiten Formatfelder (FF2) als den ZIEL-Punkt der Digitalbewegung, das kein Fahrzeug der Fahrzeuge (FZ₁...FZₙ) repräsentiert - also digital frei für die Digitalbewegung ist, oder
von einem zweiten Formatfeld der zweiten Formatfelder (FF2) als den START-Punkt der Digitalbewegung auf ein benachbartes erstes Formatfeld der ersten Formatfelder (FF1) als den ZIEL-Punkt der Digitalbewegung, das kein Fahrzeug der Fahrzeuge (FZ₁...FZₙ) repräsentiert - also digital frei für die Digitalbewegung ist,
digital bewegt wird,
**b2)** für die Digitalbewegungen in dem Kernbereich (KB) des Rasterformats (RF) in einer Bewegungsrichtung des überlangen Fahrzeugs (FZ_{übl}, FZ₁₅) eine durch die Fahrzeuglänge des überlangen Fahrzeugs (FZ_{übl}, FZ₁₅) vorgegebene Anzahl von Formatfeldern (FF1, FF2) digital frei gemacht oder digital frei gehalten wird,
**b3)** die Formatfelder (FF2, FF1) in dem Kernbereich (KB) des Rasterformats (RF) für die Digitalbewegungen in Bewegungsrichtungen der kollisionskritischen Fahrzeuge (FZₖₖ, FZ₇, FZ₁₈, FZ₂₂, FZ₃₀), die aufgrund der Fahrzeuglänge des überlangen Fahrzeugs (FZ_{übl}, FZ₁₅) zu Kollisionen zwischen dem überlangen Fahrzeug (FZ_{übl}, FZ₁₅) und den kollisionskritischen Fahrzeugen (FZₖₖ, FZ₇, FZ₁₈, FZ₂₂, FZ₃₀) führen würden, digital frei gemacht oder digital frei gehalten werden.

14. Zentrale Steuerungseinheit (STGE) nach Anspruch 13, **dadurch gekennzeichnet, dass**
die Steuereinrichtung (STER) und die Kommunikationseinrichtung (KOER) derart zusammenwirken und ausgebildet sind, dass die Steuereinrichtung (STER) via der Kommunikationseinrichtung (KOER) durch dritte Steuerungsdaten (STGD₃) die Fahrzeugverfügungsgewalt dem überlangen Fahrzeug (FZ_{übl}, FZ₁₅), insbesondere mittels eines weiteren Handshake-Protokolls, zurückgibt, wenn mit einer letzten Digitalbewegung in dem Rasterformat (RF) das überlange Fahrzeug (FZ_{übl}, FZ₁₅) digital den Kernbereich (KB) des Rasterformats (RF) verlässt und es damit den Fahrbahn-Gefahrenbereich (FGB, KZ, KZ') passiert hat.

15. Zentrale Steuerungseinheit (STGE) nach einem der Ansprüche 10 bis 14, **dadurch gekennzeichnet, dass** die Steuereinrichtung (STER) als eine offene Cloud Computing Plattform ausgebildet ist.

16. Steuerungssystem (STGS) zum Steuern zumindest teilautomatisierter Fahrzeuge (FZ₁...FZₙ), anteilig mit Fahrzeugüberlängen, in einem Fahrbahn-Gefahrenbereich (FGB), insbesondere Kreuzungen (KZ, KZ') von Fahrbahnen im Straßenverkehr, mit mindestens einer zentralen Steuerungseinheit (STGE), die zur Fahrzeugsteuerung jeweils eine Steuereinrichtung (STER) und jeweils mindestens eine Kommunikationseinrichtung (KOER) enthält, insbesondere jeweils nach einem der Ansprüche 10 bis 15, und einer in den Fahrzeugen (FZ₁...FZₙ) jeweils enthaltenen Fahrzeugkommunikationsschnittstelle (FZKS), die zur Fahrzeugsteuerung mit der Kommunikationseinrichtung (KOER) verbunden ist, das zur Fahrzeugsteuerung in dem Fahrbahn-Gefahrenbereich (FGB, KZ, KZ') derart ausgebildet ist, dass ein Verfahren nach einem der Ansprüche 1 bis 5 durchführbar ist.
